# EUROPÄISCHE PATENTSCHRIFT

(11) **EP 4 580 944 B1**
(45) Veröffentlichungstag und Bekanntmachung des Hinweises auf die Patenterteilung: **09.12.2026**
(21) Anmeldenummer: 23771787.1
(22) Anmeldetag: 01.09.2023
(51) Int. Cl.: B64D 11/06, B60N 2/427, B60N 2/22

(54) **PASSAGIERSITZVORRICHTUNG**
PASSENGER SEAT DEVICE
DISPOSITIF DE SIÈGE PASSAGER

(30) Priorität: 02.09.2022 DE 102022122322
(43) Veröffentlichungstag der Anmeldung: 09.07.2025
(73) Patentinhaber: Recaro Aircraft Seating GmbH & Co. KG, 74523 Schwäbisch Hall (DE)
(72) Erfinder: ERB, Andreas, 71549 Auenwald (DE); HORLACHER, Michael, 74523 Schwäbisch Hall (DE); SOMMER, Bernd, 74523 Schwäbisch Hall (DE)
(74) Vertreter: Daub, Thomas
(86) Internationale Anmeldenummer: PCT/EP2023/074018
(87) Internationale Veröffentlichungsnummer: WO 2024/047222

(56) Entgegenhaltungen:
- KR-U- 20120 002 684
- US-A- 3 361 474
- US-A- 3 762 766
- US-A1- 2005 093 352
- US-A1- 2017 297 456

## Beschreibung

### Stand der Technik

Die Erfindung betrifft eine Passagiersitzvorrichtung nach dem Oberbegriff des Patentanspruchs 1.

Es ist bereits eine Passagiersitzvorrichtung mit einer Aufständereinheit, die zur Montage auf einem Kabinenboden vorgesehen ist, mit einer Rückenlehne, und mit einer Lagervorrichtung, die dazu vorgesehen ist, die Rückenlehne verschwenkbar zwischen einer aufrechten Sitzstellung und einer Komfortstellung relativ zu der Aufständereinheit zu lagern, wobei die Rückenlehne ein schwenkbares Rückenlehnenelement umfasst, vorgeschlagen worden.

Die Druckschrift US 2017/297456 A1 offenbart eine Passagiersitzvorrichtung mit einer Aufständereinheit, die zur Montage auf einem Kabinenboden vorgesehen ist, mit einer Rückenlehne, und mit einer Lagervorrichtung, die dazu vorgesehen ist, die Rückenlehne verschwenkbar zwischen einer aufrechten Sitzstellung und einer Komfortstellung relativ zu der Aufständereinheit zu lagern, und mit einem Rückstellmodul, das zumindest zur Bereitstellung einer Rückstellkraft zur Rückstellung der Rückenlehne aus der Komfortstellung in die aufrechte Sitzstellung vorgesehen ist, und dazu zumindest ein Blattfederelement umfasst.

Die Druckschrift US 3 762 766 A offenbart eine Passagiersitzvorrichtung mit einer Aufständereinheit, die zur Montage auf einem Kabinenboden vorgesehen ist, mit einer Rückenlehne, und mit einer Lagervorrichtung, die dazu vorgesehen ist, die Rückenlehne verschwenkbar zwischen einer aufrechten Sitzstellung und einer Komfortstellung relativ zu der Aufständereinheit zu lagern, und mit einem Rückstellmodul, das zumindest zur Bereitstellung einer Rückstellkraft zur Rückstellung der Rückenlehne aus der Komfortstellung in die aufrechte Sitzstellung vorgesehen ist.

Die Aufgabe der Erfindung besteht insbesondere darin, eine gattungsgemäße Vorrichtung mit verbesserten Eigenschaften hinsichtlich einer Kompaktheit und einer vorteilhaft großen Beinfreiheit für einen Passagier bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Passagiersitzvorrichtung mit einer Aufständereinheit, die zur Montage auf einem Kabinenboden vorgesehen ist, mit einer Rückenlehne, mit einer Lagervorrichtung, die dazu vorgesehen ist, die Rückenlehne verschwenkbar zwischen einer aufrechten Sitzstellung und einer Komfortstellung relativ zu der Aufständereinheit zu lagern, wobei die Rückenlehne ein schwenkbares Rückenlehnenelement umfasst und mit wenigstens einem Rückstellmodul, das zumindest zur Bereitstellung einer Rückstellkraft zur Rückstellung der Rückenlehne aus der Komfortstellung in die aufrechte Sitzstellung vorgesehen ist, und dazu zumindest ein Blattfederelement umfasst.

Es wird vorgeschlagen, dass die Rückenlehne ein unteres, starres Rückenlehnenelement umfasst, wobei das Blattfederelement funktionstechnisch zwischen dem unteren Rückenlehnenelement und dem schwenkbaren Rückenlehnenelement angeordnet ist. Unter einer "Passagiersitzvorrichtung" soll vorzugsweise eine Vorrichtung verstanden werden, die zumindest einen Teil eines Passagiersitzes und/oder den gesamten Passagiersitz ausbildet. Vorzugsweise ist die Passagiersitzvorrichtung als eine Flugzeugsitzvorrichtung ausgebildet. Unter einem "Passagiersitz" soll vorzugsweise insbesondere ein Sitz verstanden werden, der dazu vorgesehen ist, einen Sitzbereich für einen Passagier auszubilden und dazu in einem Transportmittel angeordnet ist. Vorzugsweise ist der Passagiersitz als ein Flugzeugsitz ausgebildet. Grundsätzlich ist es auch denkbar, dass der Passagiersitz als ein Zugsitz ausgebildet ist. Grundsätzlich wäre es auch denkbar, dass der Passagiersitz als ein Sitz für ein anderes Transportmittel ausgebildet ist. Der Passagiersitz ist vorzugsweise als Teil einer Sitzreihe von mehreren nebeneinander angeordneten Passagiersitzen ausgebildet. Der Passagiersitz umfasst vorzugsweise wenigstens einen Sitzboden, der einen Sitzbereich für einen Passagier ausbildet, und eine Rückenlehne, die eine Rückenlehnenauflagefläche bereitstellt, an der sich ein auf dem Passagiersitz sitzender Passagier mit seinem Rücken abstützen kann.

Unter einem "Sitzboden" soll dabei insbesondere ein Teil des Passagiersitzes verstanden werden, der einen Sitzbereich bereitstellt, auf dem ein Passagier sitzen kann, wobei der Sitzboden dabei vorzugsweise wenigstens einen Grundkörper und ein auf dem Grundkörper angeordnetes Polsterelement aufweist. Ferner weist der Passagiersitz eine Aufständereinheit auf, über die der Passagiersitz auf einem Boden, insbesondere einem Kabinenboden aufgeständert ist und an die weitere Bauteile des Passagiersitzes, wie der Sitzboden und die Rückenlehne angebunden sind. Unter einer "Aufständereinheit" soll vorzugsweise eine Grundstruktur des Passagiersitzes verstanden werden, die eine tragende Struktur des Passagiersitzes ausbildet. Über die Aufständereinheit ist der Passagiersitz auf einer Aufständerebene, also insbesondere dem Kabinenboden angebunden. Die Aufständereinheit weist vorzugsweise zumindest zwei Sitzfüße und zumindest ein Querelement auf, das mit den Sitzfüßen gekoppelt ist. Das Querelement bildet ein Tragrohr aus. Vorzugsweise weist die Aufständereinheit zwei Querelemente auf, ein vorderes Querelement und ein hinteres Querelement. Die Aufständereinheit ist vorzugsweise über mehrere Fittings mit dem Boden, vorzugsweise mit entsprechenden Befestigungsschienen im Boden, gekoppelt. Die Aufständereinheit bildet ein tragendes Gestell des Passagiersitzes, vorzugsweise der gesamten Passagiersitzreihe aus.

Unter einer "Lagervorrichtung" soll ein Modul verstanden werden, mittels dessen die Rückenlehne, insbesondere ein schwenkbares Rückenlehnenelement der Rückenlehne, verschwenkbar an einer Einheit, wie insbesondere der Aufständereinheit gelagert ist. Die Lagervorrichtung kann vorzugsweise von einem Lagerbolzen gebildet sein. Grundsätzlich ist es ebenso denkbar, dass die Lagervorrichtung von einem Scharnier oder einer anderen Lagermechanik gebildet ist, mittels der die Rückenlehne, insbesondere das schwenkbare Rückenlehnenelement, verschwenkbar gelagert ist. Die Lagervorrichtung bildet eine Drehachse aus, um die die Rückenlehne, insbesondere das schwenkbare Rückenlehnenelement verschwenkbar ist.

Darunter, dass die Rückenlehne verschwenkbar ist, soll verstanden werden, dass zumindest das schwenkbare Rückenlehnenelement der Rückenlehne relativ zu einer Montagestruktur, also der Aufständereinheit, verschwenkbar ist. Unter einem "schwenkbaren Rückenlehnenelement" soll vorzugsweise ein Rückenlehnenelement verstanden werden, das zumindest einen Teil, vorzugsweise einen Großteil der Rückenlehnenfläche der Rückenlehne ausbildet und das zur Ausbildung der Komfortstellung und der aufrechten Sitzstellung relativ zu der Aufständereinheit verschwenkbar gelagert ist. Das schwenkbare Rückenlehnenelement ist zur Ausbildung der Komfortstellung und der aufrechten Sitzstellung relativ zu der Aufständereinheit verschwenkbar gelagert. Das schwenkbare Rückenlehnenelement weist eine tragende Grundstruktur auf und bildet in seinem Innenbereich die Rückenlehnenfläche aus. Vorzugsweise weist das schwenkbare Rückenlehnenelement einen Rückenlehnenrahmen und eine mit dem Rückenlehnenrahmen verbundene Bespannung oder ein Schalenelement auf, das die Rückenlehnenfläche ausbildet. Grundsätzlich wäre es auch denkbar, dass das schwenkbare Rückenlehnenelement von einem Sandwichbauteil gebildet ist. Dabei wäre es denkbar, dass das schwenkbare Rückenlehnenelement keinen Rückenlehnenrahmen aufweist.

Das schwenkbare Rückenlehnenelement ist vorzugsweise schwenkbar an der Aufständereinheit des Passagiersitzes angebunden. Das schwenkbare Rückenlehnenelement ist vorzugsweise an Sitzstrukturelementen des Passagiersitzes angebunden. Unter einem "Sitzstrukturelement" soll vorzugsweise ein Teil einer tragenden Struktur des Passagiersitzes verstanden werden, an dem weitere Bauteile des Passagiersitzes, wie beispielsweise eine Rückenlehne, ein Rückenlehnenelement oder eine Armlehne, befestigbar sind. Ein Sitzstrukturelement ist vorzugsweise als ein Sitzteiler ausgebildet. Das als Sitzteiler ausgebildete Sitzstrukturelement ist vorzugsweise mit dem zumindest einen, vorzugsweise mit den zwei Querelementen der Aufständereinheit starr verbunden. Das als Sitzteiler ausgebildete Sitzstrukturelement erstreckt sich vorzugsweise von dem vorderen Querelement im Wesentlichen horizontal bis in einen Bereich hinter dem hinteren Querelement. In einem Bereich hinter dem hinteren Querelement erstreckt sich das als Sitzteiler ausgebildete Sitzstrukturelement von der Aufständerebene in im Wesentlichen vertikaler Richtung weg, vorzugsweise bis in eine Armlehnenhöhe. Grundsätzlich ist es auch denkbar, dass die Sitzstrukturelemente einstückig mit einem Teil einer Sitzschale ausgebildet sind, beispielsweise mit einem unteren Rückenlehnenelement. Die einstückig ausgebildeten Sitzstrukturelemente könnten dabei beispielsweise von Seitenbereichen einer Sitzschale ausgebildet sein.

Die Sitzstrukturelemente weisen vorzugsweise jeweils eine Lagerstelle zur Lagerung der Rückenlehne, insbesondere des schwenkbaren Rückenlehnenelements auf. Unter einer "Lagerstelle" soll vorzugsweise ein Anbindungspunkt verstanden werden, über den ein Bauteil, wie beispielsweise ein Rückenlehnenelement, fest angebunden werden kann. Über eine Lagerstelle kann ein Bauteil vorzugsweise sowohl starr als auch beweglich angebunden werden. Vorzugsweise ist die Lagerstelle dazu vorgesehen, ein weiteres Bauteil wie insbesondere ein Rückenlehnenelement beweglich, vorzugsweise schwenkbar an das die Lagerstelle ausbildende Bauteil anzubinden. An eine Lagerstelle ist vorzugsweise ein Lagerelement, insbesondere ein Lagerbolzen der Lagervorrichtung zur Lagerung des schwenkbaren Rückenlehnenelements angebunden.

Unter einer "aufrechten Sitzstellung" soll eine maximal aufrechte Sitzstellung des Passagiersitzes verstanden werden, in der der Passagiersitz eine maximal aufrechte Sitzstellung aufweist. Ist der Passagiersitz als ein Flugzeugsitz ausgebildet, ist die aufrechte Sitzstellung vorzugsweise als eine Sitzstellung ausgebildet, die aus Sicherheitsgründen, insbesondere in einer Startphase, in einer Landephase und während Turbulenzen, eingenommen werden muss. Die aufrechte Sitzstellung ist dabei als eine sogenannte TTL- Stellung (Taxi, Takeoff, Landing) ausgebildet. In der aufrechten Sitzstellung stehen die Rückenlehne, insbesondere ein beweglich gelagertes Rückenlehnenelement und der Sitzboden des Passagiersitzes im Wesentlichen senkrecht aufeinander, vorzugsweise in einem Winkel von zwischen 95 Grad und 115 Grad. Unter einer "Komfortstellung" soll insbesondere eine nach hinten geneigte Sitzstellung des Passagiersitzes verstanden werden, in der zumindest die Rückenlehne, insbesondere ein schwenkbares Rückenlehnenelement, entgegen einer Sitzrichtung des Passagiersitzes nach hinten geneigt ist, wodurch einem auf dem Passagiersitz sitzenden Passagier eine komfortable, nach hinten geneigte Sitzposition ermöglicht wird. Grundsätzlich ist es auch denkbar, dass in der Komfortstellung zusätzlich zu dem schwenkbaren Rückenlehnenelement auch der Sitzboden im Gegensatz zu der aufrechten Sitzstellung des Passagiersitzes geneigt ist. In der Komfortstellung können die Rückenlehne, insbesondere das schwenkbare Rückenlehnenelement und der Sitzboden insbesondere einen anderen, insbesondere vorteilhaft einen größeren Winkel zueinander aufweisen als in der aufrechten Sitzstellung (TTL-Stellung). In der Komfortstellung ist die Rückenlehne, insbesondere das schwenkbare Rückenlehnenelement, aus einer maximal aufrechten Sitzstellung um wenigstens 3 Grad, vorzugsweise zumindest 5 Grad, besonders bevorzugt um mehr als 8 Grad nach hinten verschwenkt.

Unter einem "Rückstellmodul" soll vorzugsweise ein Modul verstanden werden, das dazu vorgesehen ist, eine Rückstellkraft zur Rückstellung der Rückenlehne, insbesondere eines beweglich gelagerten Rückenlehnenelements auszuüben, um dieses von einer Stellung, insbesondere einer Komfortstellung, in eine aufrechte Sitzstellung zu bewegen. Das Rückstellmodul weist dazu vorzugsweise ein Element auf, das eine Kraft zur Verstellung der Rückenlehne, insbesondere des schwenkbaren Rückenlehnenelements, bereitstellt. Das Element zur Bereitstellung einer Rückstellkraft ist als ein Blattfederelement ausgebildet. Das Rückstellmodul weist eine Verriegeleinheit auf, die dazu vorgesehen ist, das Rückstellmodul selbst und/oder das schwenkbare Rückenlehnenelement zu verriegeln bzw. zu entriegeln. Die Verriegeleinheit weist einen Verriegelzustand und einen Entriegelzustand auf. In ihrem Verriegelzustand verriegelt die Verriegeleinheit das Rückstellmodul und/oder das schwenkbare Rückenlehnenelement und das Rückstellmodul kann keine Rückstellkraft auf das schwenkbare Rückenlehnenelement ausüben. In ihrem Entriegelzustand ist das Rückstellmodul durch die Verriegeleinheit entriegelt und kann eine Rückstellkraft auf die Rückenlehne, insbesondere das schwenkbare Rückenlehnenelement, ausüben, um die Rückenlehne in ihre aufrechte Sitzstellung zu verstellen. Die Verriegeleinheit weist vorzugsweise zumindest ein Verriegelelement auf, das das Rückstellmodul selbst und/oder das schwenkbare Rückenlehnenelement mechanisch verriegelt. Das Verriegelelement ist vorzugsweise als ein Form- und/oder Kraftschlusselement ausgebildet. Das Verriegelelement ist zwischen einer Verriegelstellung und einer Entriegelstellung verstellbar. Vorzugsweise ist das Verriegelelement mittels eines mechanischen Verstellelements, wie beispielsweise einem Bowdenzug zwischen seiner Verriegelstellung und seiner Entriegelstellung verstellbar. Grundsätzlich ist es auch denkbar, dass das Verriegelelement mittels eines elektrischen, beispielsweise einem elektromagnetischen Aktuator zwischen seiner Verriegelstellung und seiner Entriegelstellung verstellbar ist. Beispielsweise wäre es auch denkbar, dass das Verriegelelement als ein Teil eines elektronischen, insbesondere eines elektromechanischen Aktuators ausgebildet ist. Es ist also denkbar, dass das Rückstellmodul und/oder das schwenkbare Rückenlehnenelement mittels der Verriegeleinheit elektrisch oder elektronisch ver- bzw. entriegelbar ist/sind. Unter einem "Blattfederelement" soll vorzugsweise ein längliches Federelement verstanden werden, das dazu vorgesehen ist, in einem gespannten Zustand eine Federkraft bereitzustellen, die im Wesentlichen orthogonal zu einer Haupterstreckungsrichtung des Blattfederelements vorgesehen ist. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Der Passagiersitz ist als ein Sitz mit einer rein mechanischen Verstellung vorgesehen. Insbesondere eine Verstellung der Rückenlehne, insbesondere des schwenkbaren Rückenlehnenelements erfolgt lediglich durch eine, durch einen Passagier aufgebrachte Verstellkraft und/oder die Kraft eines Federelements. Der Passagiersitz weist vorzugsweise keine elektromechanischen Aktuatoren auf, durch die eine elektrische Verstellung des Passagiersitzes, insbesondere eine elektrische Verstellung des Passagiersitzes, insbesondere einer Rückenlehne und/oder eines Sitzbodens zwischen einer aufrechten Sitzstellung und einer Komfortstellung möglich ist. Der Passagiersitz ist vorzugsweise nicht als ein Businessclass- oder First-Class-Sitz ausgebildet, der eine elektronische Passagiersitzverstellung aufweist.

Durch eine erfindungsgemäße Ausgestaltung kann vorteilhaft eine besonders kompakte Passagiersitzvorrichtung bereitgestellt werden, bei der ein Rückstellmodul besonders vorteilhaft ausgebildet ist. Besonders vorteilhaft kann durch die erfindungsgemäße Ausgestaltung ein Passagiersitz bereitgestellt werden, der eine besonders vorteilhafte Beinfreiheit für einen Passagier, insbesondere einen hinter dem Passagiersitz sitzenden Passagier, bereitstellt, da das Rückstellmodul besonders platzsparend ausgebildet werden kann. Dadurch kann ein Passagiersitz, insbesondere in einem Kniebereich besonders schmal ausgebildet werden und eine besonders vorteilhaft große Beinfreiheit aufweisen.

Weiter wird vorgeschlagen, dass das schwenkbare Rückenlehnenelement über die Lagervorrichtung verschwenkbar mit der Aufständereinheit verbunden ist, wobei das Blattfederelement funktionstechnisch zwischen dem schwenkbaren Rückenlehnenelement und dem unteren Rückenlehnenelement angeordnet ist. Unter "funktionstechnisch zwischen zwei Elementen angeordnet" soll vorzugsweise verstanden werden, dass das Blattfederelement sich mit einer Seite direkt oder indirekt an der Aufständereinheit und mit einer zweiten Seite direkt oder indirekt an dem schwenkbaren Rückenlehnenelement abstützt und dadurch dazu vorgesehen ist, eine Federkraft zwischen der Aufständereinheit und dem schwenkbaren Rückenlehnenelement wirken zu lassen. Das Blattfederelement ist mit einem ersten Ende an dem schwenkbaren Rückenlehnenelement angebunden. Mit einem zweiten Ende ist das Blattfederelement an der Aufständereinheit angebunden. Unter "angebunden" soll vorzugsweise wahlweise fest verbunden, oder anliegen verstanden werden. Das Blattfederelement kann vorzugsweise direkt oder indirekt mit dem schwenkbaren Rückenlehnenelement bzw. der Aufständereinheit verbunden sein. Vorzugsweise weist das Rückstellmodul zur Anbindung des Blattfederelements an das schwenkbare Rückenlehnenelement eine erste Befestigungseinheit auf. Vorzugsweise weist das Rückstellmodul zur Anbindung des Blattfederelements an die Aufständereinheit eine zweite Befestigungseinheit auf. Vorzugsweise ist wahlweise die erste Befestigungseinheit oder die zweite Befestigungseinheit als ein Loslager ausgebildet, über das das Blattfederelement zumindest in einer Richtung eine Relativbewegung zu dem schwenkbaren Rückenlehnenelement bzw. der Aufständereinheit ausführen kann. Grundsätzlich ist es auch denkbar, dass beide Befestigungseinheiten als ein Loslager ausgebildet sind. Dadurch kann die Rückenlehne besonders vorteilhaft ausgebildet werden.

Ferner wird vorgeschlagen, dass das Blattfederelement zumindest teilweise in das schwenkbare Rückenlehnenelement integriert ist. Unter "zumindest teilweise integriert" soll vorzugsweise verstanden werden, dass das Blattfederelement starr mit zumindest einem Teilbereich des schwenkbaren Rückenlehnenelements verbunden ist. Das Blattfederelement kann dabei lediglich mit dem schwenkbaren Rückenlehnenelement verbunden sein, oder aber auch einen Teil einer tragenden Struktur des schwenkbaren Rückenlehnenelements ausbilden. Dadurch kann das Blattfederelement besonders vorteilhaft und platzsparend verbaut werden.

Es wird weiterhin vorgeschlagen, dass das Blattfederelement zumindest teilweise einstückig mit dem schwenkbaren Rückenlehnenelement ausgebildet ist. Unter "einstückig" soll insbesondere zumindest stoffschlüssig verbunden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Darunter, dass das Blattfederelement zumindest teilweise einstückig ausgebildet ist, soll vorzugsweise verstanden werden, dass zumindest ein Teilbereich des Blattfederelements von dem schwenkbaren Rückenlehnenelement ausgebildet ist. Dadurch kann das Blattfederelement besonderes einfach und platzsparend in die Passagiersitzvorrichtung integriert werden.

Des Weiteren wird vorgeschlagen, dass die Rückenlehne zumindest in einem unteren Bereich sich von einem Mittelbereich jeweils seitlich nach außen erstreckende, elastische Rippen aufweist, die dazu vorgesehen sind, federelastisch ausgelenkt zu werden. Die elastischen Rippen sind vorzugsweise als Teil des schwenkbaren Rückenlehnenelements der Rückenlehne ausgebildet. Die Rippen sind dabei vorzugsweise zumindest teilweise einstückig mit dem schwenkbaren Rückenlehnenelement ausgebildet. Grundsätzlich wäre es auch denkbar, dass die Rippenelemente jeweils als separate Elemente ausgebildet sind, die austauschbar an einem Grundkörper des schwenkbaren Rückenlehnenelements montiert sind. Grundsätzlich ist es auch denkbar, dass die Rippen von einem starren unteren Rückenlehnenelement ausgebildet sind. Ferner ist es ebenso denkbar, dass die elastischen Rippen als Teil eines separaten mit der Rückenlehne verbundenen Bauteils, insbesondere einem Schalenelement gebildet sind. Die elastischen Rippen können dabei wahlweise als integrierte, einstückige Elemente mit dem jeweiligen Bauteil, oder als austauschbar montierbare Elemente ausgebildet sein. Dadurch kann die Rückenlehne besonders leicht und komfortabel ausgebildet werden.

Weiterhin wird vorgeschlagen, dass das schwenkbare Rückenlehnenelement ein Schalenelement umfasst, das in einem unteren Bereich einen vertikal durchgehenden Mittelbereich und die sich seitlich nach außen erstreckenden Rippen im Wesentlichen einstückig ausbildet. Unter einem "Schalenelement" soll vorzugsweise ein flächiges Element aus einem faserverstärkten Kunststoff verstanden werden. Vorzugsweise sind die sich nach außen erstreckenden Rippen komplett einstückig von dem Schalenelement ausgebildet. Grundsätzlich ist es auch denkbar, dass zumindest ein Teilbereich der sich nach außen erstreckenden Rippen separat ausgebildet sind und in einem Montageschritt mit dem Schalenelement verbunden werden. Dadurch kann das schwenkbare Rückenlehnenelement besonders vorteilhaft ausgebildet werden.

Außerdem wird vorgeschlagen, dass der durchgehende Mittelbereich des Schalenelements einen Aufnahmebereich für das Blattfederelement aufweist oder das Blattfederelement zumindest teilweise ausbildet. Unter einem "Aufnahmebereich" soll vorzugsweise ein Bereich verstanden werden, der eine Aufnahme für ein Element, wie insbesondere das Blattfederelement ausbildet, in dem das Blattfederelement kraft-, stoff- und/oder formschlüssig angebunden ist. Dadurch kann das Blattfederelement vorteilhaft einfach in das schwenkbare Rückenlehnenelement integriert werden.

Unter einem "unteren Rückenlehnenelement " soll vorzugsweise ein Element verstanden werden, das einen unteren einem Sitzboden zugewandten Teil der Rückenlehne starr ausbildet. Das untere Rückenlehnenelement ist vorzugsweise von einem Schalenelement gebildet. Das untere Rückenlehnenelement ist vorzugsweise von einem Schalenelement aus einem faserverstärkten Kunststoff gebildet. Das untere Rückenlehnenelement ist vorzugsweise als ein separates Element ausgebildet. Das untere Rückenlehnenelement ist vorzugsweise starr, also unbeweglich, an der Aufständereinheit befestigt. Grundsätzlich ist es ebenso denkbar, dass das untere Rückenlehnenelement einstückig mit einer Sitzschale des Sitzbodens ausgebildet ist. Dadurch kann die Rückenlehne besonders vorteilhaft mit einem hohen Drehpunkt bereitgestellt werden, wodurch insbesondere eine im Kniebereich vorteilhaft schmale Rückenlehne bereitgestellt werden kann.

Zudem wird vorgeschlagen, dass das Blattfederelement zur Bereitstellung einer Rückstellkraft, zumindest teilweise einstückig mit dem unteren Rückenlehnenelement ausgebildet ist. Dadurch kann das Blattfederelement vorteilhaft einfach ausgebildet und in den Passagiersitz integriert werden.

Weiter wird vorgeschlagen, dass die Lagervorrichtung eine Drehachse ausbildet, über die das schwenkbare Rückenlehnenelement zu dem unteren Rückenlehnenelement verschwenkbar gelagert ist, wobei die Drehachse oberhalb eines Kniebereichs der Rückenlehne angeordnet ist. Unter einem "Kniebereich" soll vorzugsweise ein Bereich der Rückenlehne verstanden werden, in dem die Knie eines hinter dem Passagiersitz sitzenden Passagiers angeordnet sind. Der Kniebereich ist vorzugsweise als ein Bereich ausgebildet, der sich von einem unteren Ende der Rückenlehne bis in einen Bereich von zumindest 650 mm, besonders bevorzugt von 700 mm über der Aufständerebene erstreckt. Der Kniebereich ist vorzugsweise als ein Bereich der Rückenlehne zwischen 400 mm und 700mm, besonders bevorzugt als ein Bereich der Rückenlehne zwischen 450 mm und 650 mm, gemessen von der Aufständerebene, ausgebildet. Dadurch kann ein besonders vorteilhafter Kniebereich für einen hinter dem Passagiersitz sitzenden Passagier bereitgestellt werden.

Die erfindungsgemäße Passagiersitzvorrichtung soll hierbei nicht auf die oben beschriebene Anwendung und Ausführungsform beschränkt sein, soweit dies unter die beigefügten Ansprüche fällt. Insbesondere kann die erfindungsgemäße Passagiersitzvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen sind sechs Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Ansicht einer Passagiersitzreihe mit einer Passagiersitzvorrichtung in einem ersten Ausführungsbeispiel mit einer Rückenlehne mit einem oberen Rückenlehnendrehpunkt und einem Rückstellmodul mit einem Blattfederelement,
- Fig. 2: eine schematische Rückansicht der Passagiersitzreihe mit dem Rückstellmodul und dem Blattfederelement,
- Fig. 3: eine schematische Seitenansicht mit zwei Passagiersitzreihen und einem schwenkbaren Rückenlehnenelement in einer aufrechten Sitzstellung und einer Komfortstellung,
- Fig. 4: eine Detailansicht einer Anbindung des Blattfederelements mittels einer Befestigungseinheit,
- Fig. 5: eine schematische Ansicht einer Passagiersitzreihe mit einer Passagiersitzvorrichtung in einem zweiten Ausführungsbeispiel mit einer Rückenlehne mit einem oberen Rückenlehnendrehpunkt, die eine Bespannung aufweist, und einem Rückstellmodul mit einem Blattfederelement,
- Fig. 6: eine schematische Rückansicht des Passagiersitzes mit dem bespannten Rückenlehnenelement, das eine Bespannung aufweist, und dem Rückstellmodul mit dem Blattfederelement,
- Fig. 7: eine schematische Darstellung eines schwenkbaren Rückenlehnenelements, welches ein als Blattfederelement ausgebildeten Federelement ausbildet, in einem dritten Ausführungsbeispiel der Passagiersitzvorrichtung,
- Fig. 8: eine schematische Darstellung einer Passagiersitzvorrichtung in einem vierten Ausführungsbeispiel mit Rückstellmodul mit einem Blattfederelement, das von einem unteren Rückenlehnenelement gebildet ist
- Fig. 9: eine schematische Darstellung einer Passagiersitzvorrichtung in einem Bespiel das nicht unter den Geltungsbereich der Ansprüche fällt, mit einer schwenkbaren Rückenlehne mit einem untern Rückenlehnendrehpunkt, und mit einem Rückstellmodul das ein Blattfederelement aufweist, und
- Fig. 10: eine schematische Darstellung einer Passagiersitzvorrichtung in einem das nicht unter den Geltungsbereich der Ansprüche fällt, mit einem Sitzschalenelement, das einen Sitzboden und ein unteres Rückenlehnenelement ausbildet und mit einem Rückstellmodul das ein Blattfederelement aufweist.

### Beschreibung der Ausführungsbeispiele

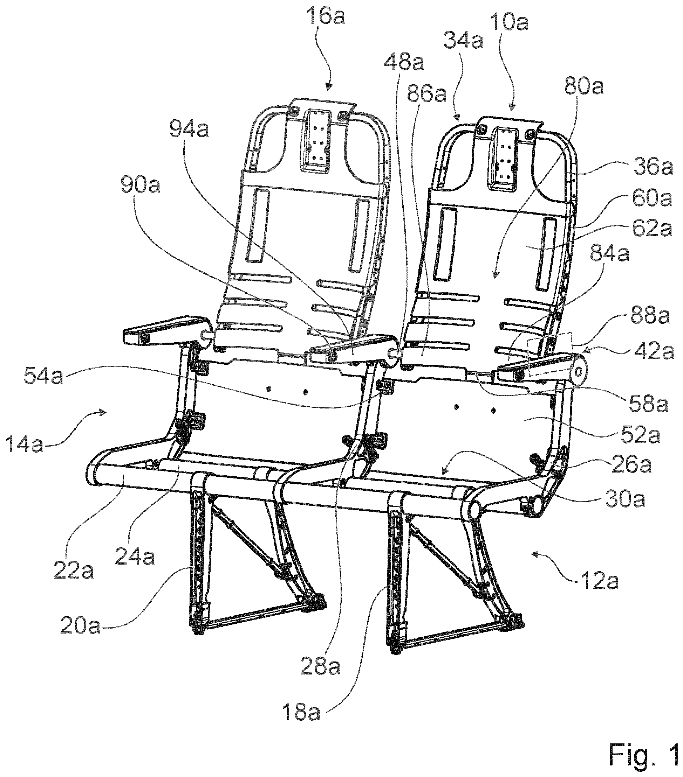

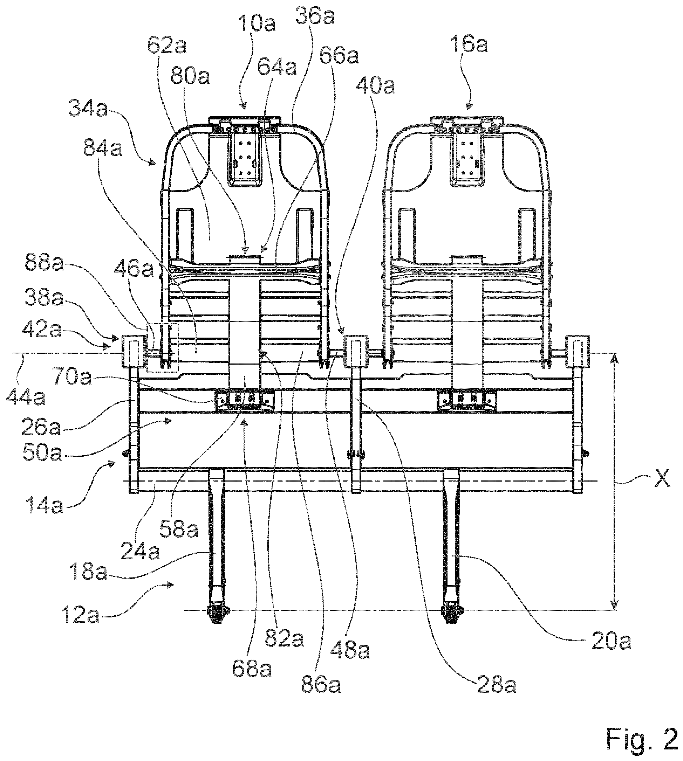

Die Figuren 1 bis 4 zeigen eine Passagiersitzvorrichtung in einem ersten Ausführungsbeispiel. Die Passagiersitzvorrichtung ist dabei Teil eines Passagiersitzes 10a. Der Passagiersitz 10a ist als ein Flugzeugsitz ausgebildet. Der Passagiersitz 10a ist in einem montierten Zustand in einer Flugzeugkabine eines Flugzeugs aufgeständert. Der Passagiersitz 10a ist dazu vorgesehen, in einem montierten Zustand fest auf einem Kabinenboden der Flugzeugkabine montiert zu werden. Die Passagiersitzvorrichtung weist eine Aufständereinheit 12a auf. Mittels der Aufständereinheit 12a ist der Passagiersitz 10a auf dem Kabinenboden der Flugzeugkabine aufständerbar. Der Kabinenboden bildet eine Aufständerebene aus. Der Passagiersitz 10a ist als ein Teil einer Passagiersitzreihe 14a ausgebildet. Der Passagiersitz 10a ist vorzugsweise als ein Teil einer Passagiersitzreihe 14a ausgebildet, die mehr als einen Passagiersitz 10a umfasst. Beispielhaft ist in den Figuren die Passagiersitzreihe 14a mit zwei Passagiersitzen 10a, 16a gezeigt. Die beispielhaft gezeigte Passagiersitzreihe 14a weist einen zweiten Passagiersitz 16a auf. Der weitere Passagiersitz 16a ist benachbart zu dem ersten Passagiersitz 10a angeordnet. Der zweite Passagiersitz 16a ist vorzugsweise identisch zu dem ersten Passagiersitz 10a ausgebildet, weswegen im Folgenden lediglich der eine Passagiersitz 10a näher beschrieben wird. Grundsätzlich ist es auch denkbar, dass die Passagiersitzreihe 14a drei oder mehr Passagiersitze 10a, 16a aufweist. Die Aufständereinheit 12a ist dabei als eine gemeinsame Aufständereinheit 12a der Passagiersitze 10a, 16a einer Passagiersitzreihe 14a ausgebildet. Die Aufständereinheit 12a umfasst zwei Sitzfüße 18a, 20a. Die Sitzfüße 18a, 20a sind jeweils über nicht näher dargestellte Fittings mit Befestigungsschienen gekoppelt, die fest mit dem Kabinenboden verbunden sind. Die Fittings sind fest in den Befestigungsschienen arretierbar.

Die Aufständereinheit 12a weist zwei Querträger 22a, 24a auf. Die Querträger 22a, 24a sind als Tragrohre ausgebildet. Ein vorderer Querträger 22a ist in einem vorderen Bereich des Passagiersitzes 10a angeordnet. Ein hinterer Querträger 24a ist in einem hinteren Bereich des Passagiersitzes 10a angeordnet. Die Querträger 22a, 24a verlaufen in einer Querrichtung des Passagiersitzes 10a. Die Querträger 22a, 24a erstrecken sich zumindest im Wesentlichen über eine gesamte Quererstreckung aller Passagiersitze 10a der Passagiersitzreihe 14a. Die Passagiersitzvorrichtung weist zwei Sitzstrukturelemente 26a, 28a auf. Die zwei Sitzstrukturelemente 26a, 28a sind jeweils auf einer Seite eines Sitzbereichs 30a der Passagiersitzvorrichtung angeordnet. Die zwei Sitzstrukturelemente 26a, 28a sind jeweils seitlich eines Sitzbereichs 30a, den der Passagiersitz 10a ausbildet, angeordnet. Die Sitzstrukturelemente 26a, 28a sind als Sitzteiler ausgebildet. Die Sitzstrukturelemente 26a, 28a sind an den Querträgern 22a, 24a angeordnet. Die Sitzstrukturelemente 26a, 28a sind in Querrichtung beabstandet zueinander an den Querträgern 22a, 24a befestigt. Die Sitzstrukturelemente 26a, 28a sind positionsfest mit den Querträgern 22a, 24a verbunden. Die Sitzstrukturelemente 26a, 28a sind an ihrem vorderen Ende jeweils mit dem vorderen Querträger 22a verbunden. Die Sitzstrukturelemente 26a, 28a sind dabei vorzugsweise kraft- und/oder formschlüssig mit dem vorderen Querträger 22a verbunden. Die Sitzstrukturelemente 26a, 28a sind im wesentlichen L-förmig ausgebildet. Die Sitzstrukturelemente 26a, 28a weisen jeweils einen ersten Teilbereich auf, der in einem montierten Zustand im Wesentlichen horizontal ausgerichtet ist. Die Sitzstrukturelemente 26a, 28a weisen jeweils einen zweiten Teilbereich auf, der im montierten Zustand im Wesentlichen vertikal ausgerichtet ist. Der zweite Teilbereich der Sitzstrukturelemente 26a, 28a ist in einem hinteren Bereich des Passagiersitzes 10a angeordnet. Der zweite Teilbereich der Sitzstrukturelemente 26a, 28a erstreckt sich bis an ein hinteres Ende der Sitzstrukturelemente 26a, 28a. Der zweite Teilbereich der Sitzstrukturelemente 26a, 28a bildet einen hinteren Bereich der Sitzstrukturelemente 26a, 28a aus. Die Sitzstrukturelemente 26a, 28a erstrecken sich also in ihrem hinteren Bereich nach oben, von der Aufständereinheit 12a, insbesondere der Aufständerebene, weg. Die Sitzstrukturelemente 26a, 28a erstrecken sich in ihrem hinteren Bereich nach oben bis im Wesentlichen auf eine Armlehnenhöhe X. Die Sitzstrukturelemente 26a, 28a erstrecken sich bis auf eine Armlehnenhöhe X des Passagiersitzes 10a. Die Armlehnenhöhe X beträgt 650 mm. Grundsätzlich ist es vorzugsweise denkbar, dass die Armlehnenhöhe X in einem Bereich zwischen 500 mm - 700 mm liegt.

Die als Sitzteiler ausgebildeten Sitzstrukturelemente 26a, 28a sind dazu vorgesehen, dass verschiedene Bauteile des entsprechenden Passagiersitzes 10a, 16a an diesen befestigt werden, wie im Folgenden zumindest teilweise näher beschrieben ist. Grundsätzlich ist es auch denkbar, dass die Aufständereinheit 12a keine oder anders ausgeführte Sitzstrukturelemente 26a, 28a aufweist und entsprechende Bauteile des Passagiersitzes 10a, 16a anders an die Aufständereinheit 12a angebunden sind.

Die Passagiersitzvorrichtung umfasst einen Sitzboden 32a. Der Sitzboden 32a bildet den Sitzbereich 30a aus. Der Sitzboden 32a bildet eine Sitzfläche des Passagiersitzes 10a aus. Der Sitzboden 32a weist einen Grundkörper und ein auf dem Grundkörper fest angebrachtes Polsterelement auf. Das Polsterelement bildet die Sitzfläche des Passagiersitzes 10a aus. Der Sitzboden 32a ist an die Aufständereinheit 12a angebunden. Der Sitzboden 32a ist insbesondere an die Querträger 22a, 24a angebunden. Der Sitzboden 32a ist mit der Rückenlehne 34a gekoppelt. Der Sitzboden 32a ist direkt mit der Rückenlehne 34a gekoppelt.

Die Passagiersitzvorrichtung umfasst eine Rückenlehne 34a. Die Rückenlehne 34a ist dabei dazu vorgesehen, dass eine Person, die auf dem Passagiersitz 10a sitzt, dessen Teil die Passagiersitzvorrichtung ist, ihren Rücken an der Rückenlehne 34a abstützen kann. Die Rückenlehne 34a weist vorzugsweise eine nicht näher dargestellte Polsterung auf. Die Rückenlehne 34a bildet eine Rückenlehnenabstützfläche aus. Die Rückenlehne 34a ist an einem hinteren Ende des Sitzbodens 32a angeordnet. Die Rückenlehne 34a ist schwenkbar zu der Aufständereinheit 12a angeordnet. Die Rückenlehne 34a ist an die Sitzstrukturelemente 26a, 28a angebunden. Der Passagiersitz 10a bildet dabei eine Sitzrichtung aus. Die Sitzrichtung ist als die Richtung definiert, in der ein Passagier auf dem Passagiersitz 10a sitzt. Der Sitzrichtung steht orthogonal auf einer Rückenlehnenfläche der Rückenlehne 34a und verläuft parallel zu der Aufständerebene in Richtung eines vorderen Endes des Sitzbodens 32a.

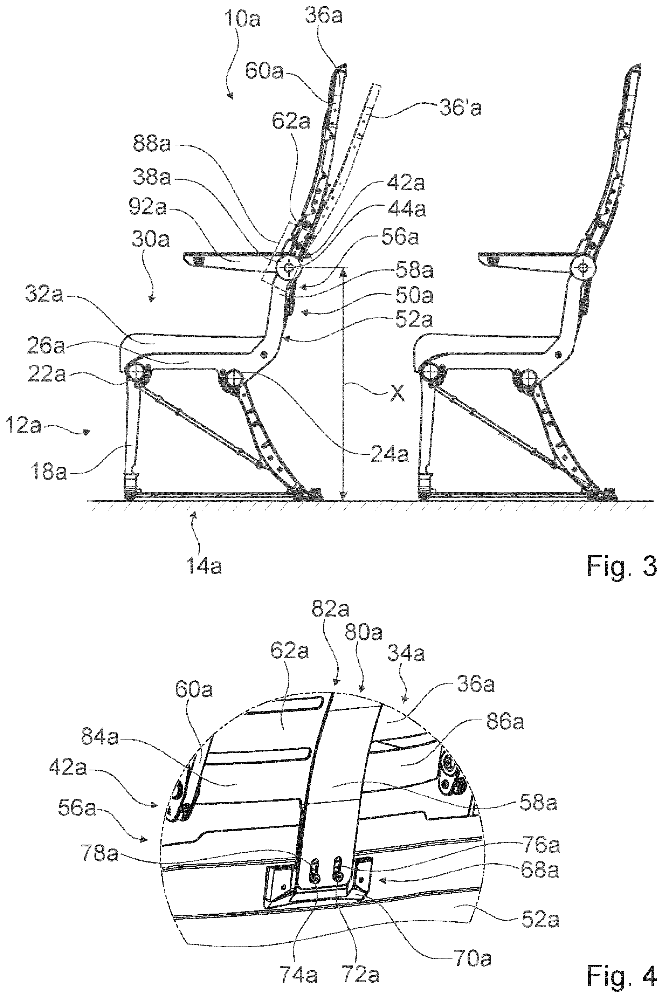

Die Rückenlehne 34a ist schwenkbar ausgebildet. Die Rückenlehne 34a ist dazu vorgesehen, zwischen einer aufrechten Sitzstellung und einer Komfortstellung verschwenkt zu werden. Die Rückenlehne 34a ist dazu vorgesehen relativ zu der Aufständereinheit 12a verschwenkt zu werden. Die Rückenlehne 34a ist relativ zu den Sitzstrukturelementen 26a, 28a verschwenkbar. Die Rückenlehne 34a weist ein schwenkbares Rückenlehnenelement 36a auf. Das schwenkbare Rückenlehnenelement 36a ist schwenkbar an der Aufständereinheit 12a gelagert. Das schwenkbare Rückenlehnenelement 36a ist schwenkbar an die Sitzstrukturelemente 26a, 28a angebunden. Die Sitzstrukturelemente 26a, 28a weisen jeweils eine Lagerstelle 38a, 40a zur Lagerung der Rückenlehne 34a auf. Die Lagerstellen 38a, 40a sind dazu vorgesehen, dass das schwenkbare Rückenlehnenelement 36a daran gelagert wird. Das schwenkbare Rückenlehnenelement 36a ist über die Lagerstellen 38a, 40a schwenkbar an die Sitzstrukturelemente 26a, 28a angebunden. Die Lagerstellen 38a, 40a sind als Lageraufnahmen ausgebildet. Die Lagerstellen 38a, 40a definieren eine Position, insbesondere eine Höhe einer Drehachse 44a, um die die Rückenlehne 34a, insbesondere das schwenkbare Rückenlehnenelement 36a, schwenkbar gelagert ist. In der Figur 3 ist die Rückenlehne 34a schematisch in gestrichelter Form in der Komfortstellung dargestellt. Das schwenkbare Rückenlehnenelement 36a ist in der Figur 3 gestrichelt als schwenkbares Rückenlehnenelement 36a' in der Komfortstellung dargestellt. Das schwenkbare Rückenlehnenelement 36a' ist aus der aufrechten Sitzstellung um ca. 10 Grad entgegen der Sitzrichtung nach hinten in seine Komfortstellung verschwenkt. Grundsätzlich wäre es auch denkbar, dass das schwenkbare Rückenlehnenelement 36a' in der Komfortstellung lediglich um 5 Grad oder um 8 Grad aus der aufrechten Sitzstellung nach hinten verschwenkt ist.

Die Passagiersitzvorrichtung weist eine Lagervorrichtung 42a auf. Die Lagervorrichtung 42a ist dazu vorgesehen, die Rückenlehne 34a verschwenkbar zwischen der aufrechten Sitzstellung und der Komfortstellung zu lagern. Die Lagervorrichtung 42a ist dazu vorgesehen, das schwenkbare Rückenlehnenelement 36a verschwenkbar zwischen der aufrechten Sitzstellung und der Komfortstellung zu lagern. Die Lagervorrichtung 42a bildet die Drehachse 44a aus. Das schwenkbare Rückenlehnenelement 36a ist mittels der Lagervorrichtung 42a um die Drehachse 44a schwenkbar. Die Lagervorrichtung 42a weist zwei Lagerbolzen 46a, 48a auf. Die Lagerbolzen 46a, 48a bilden die Drehachse 44a aus. Die Lagerbolzen 46a, 48a sind jeweils mit einer der Lagerstellen 38a, 40a eines der Sitzstrukturelemente 26a, 28a verbunden. Die Lagerbolzen 46a, 48a sind vorzugsweise drehfest an der jeweiligen Lagerstelle 38a, 40a angebracht. Das schwenkbare Rückenlehnenelement 36a ist drehbar an den Lagerbolzen 46a, 48a gelagert. Vorzugsweise ist das schwenkbare Rückenlehnenelement 36a über eine Gleitlagerung schwenkbar an den Lagerbolzen 46a, 48a gelagert. Grundsätzlich wäre es auch denkbar, dass das schwenkbar Rückenlehnenelement 36a mittels eines Wälzlagers drehbar an den Lagerbolzen 46a, 48a gelagert ist. Grundsätzlich wäre es ebenso denkbar, dass die Lagerbolzen 46a, 48a über eine geeignete Lagerung drehbar an die jeweiligen Lagerstellen 38a, 40a der Sitzstrukturelemente 26a, 28a angebunden sind.

Das schwenkbare Rückenlehnenelement 36a weist einen Rückenlehnenrahmen 60a auf. Der Rückenlehnenrahmen 60a bildet eine tragende Struktur des schwenkbaren Rückenlehnenelements 36a aus. Der Rückenlehnenrahmen 60a ist als ein umlaufender Rahmen ausgebildet. Der Rückenlehnenrahmen 60a ist vorzugsweise im Wesentlichen U-förmig ausgebildet. Der Rückenlehnenrahmen 60a weist zwei seitliche Rahmenelemente und ein oberes Rahmenelement auf, das die beiden seitlichen Rahmenelemente an einem oberen Ende des Rückenlehnenrahmens 60a verbindet. An einem unteren Ende ist der Rückenlehnenrahmen 60a vorzugsweise offen. Das untere Ende des Rückenlehnenrahmens 60a bildet ein unteres Ende des schwenkbaren Rückenlehnenelements 36a aus. Die Lagerbolzen 46a, 48a sind jeweils an einem unteren Ende des Rückenlehnenrahmens 60a an dem zugewandten seitlichen Rahmenelement an den Rückenlehnenrahmen 60a des schwenkbaren Rückenlehnenelements 36a angebunden.

Das schwenkbare Rückenlehnenelement 36a weist ein Schalenelement 62a auf. Das Schalenelement 62a ist als ein plattenartiges Element ausgebildet. Das Schalenelement 62a ist aus einem faserverstärkten Kunststoff gebildet. Das Schalenelement 62a ist beispielsweise aus einem GFK oder einem CFK gebildet. Das Schalenelement 62a ist dazu vorgesehen, die Rückenlehnenabstützfläche des schwenkbaren Rückenlehnenelement 36a auszubilden. Das Schalenelement 62a ist in einem von dem Rückenlehnenrahmen 60a aufgespannten Innenbereich des schwenkbaren Rückenlehnenelements 36a angeordnet. Das Schalenelement 62a ist fest mit dem Rückenlehnenrahmen 60a des schwenkbaren Rückenlehnenelements 36a verbunden. Das Schalenelement 62a ist zumindest in Teilbereichen mit den seitlichen Rahmenelementen des Rückenlehnenrahmens 60a fest verbunden. Vorzugsweise ist das Schalenelement 62a mit einem oberen Ende an das obere Rahmenelement des Rückenlehnenrahmens 60a angebunden. Das Schalenelement 62a bildet vorzugsweise eine Rückenlehnenkontur des schwenkbaren Rückenlehnenelements 36a aus. Das Schalenelement 62a ist dazu vorgesehen, dass auf ihm ein Polsterelement der Rückenlehne 34a angebracht wird.

Die Rückenlehne 34a ist als eine Rückenlehne mit einem hohen Rückenlehnendrehpunkt ausgebildet. Der Rückenlehnendrehpunkt ist von der Drehachse 44a der Lagervorrichtung 42a gebildet. Der Rückenlehnendrehpunkt, also die Drehachse 44a der Lagervorrichtung 42a, ist oberhalb eines Kniebereichs 50a des Passagiersitzes 10a angeordnet. Der Kniebereich 50a des Passagiersitzes 10a erstreckt sich ausgehend von dem Kabinenboden bis auf eine Höhe von 650 mm. Der Kniebereich 50a ist als ein Bereich angeordnet, in dem ein hinter dem Passagiersitz 10a sitzender Passagier seine Knie anordnen kann.

Zur Ausbildung des hohen Rückenlehnendrehpunkts bilden die Sitzstrukturelemente 26a, 28a ihre Lagerstellen 38a, 40a zur Lagerung der Rückenlehne 34a in einem hohen Bereich aus. Die Sitzstrukturelemente 26a, 28a bilden ihre Lagerstellen 38a, 40a jeweils an einem oberen Ende aus. Die Sitzstrukturelemente 26a, 28a bilden ihre Lagerstellen 38a, 40a an ihrem der Aufständerebene abgewandten oberen Ende des hinteren, zweiten Teilbereichs aus. Die Lagerstellen 38a, 40a der Sitzstrukturelemente 26a, 28a sind oberhalb des Kniebereichs 50a angeordnet. Die Lagerstellen 38a, 40a der Sitzstrukturelemente 26a, 28a sind in der Armlehnenhöhe X angeordnet. Die Lagerstellen 38a, 40a zur Lagerung des schwenkbaren Rückenlehnenelements 36a definieren die Drehachse 44a, die oberhalb des Kniebereichs 50a der Rückenlehne 34a angeordnet ist.

Das schwenkbare Rückenlehnenelement 36a bildet die Rückenlehne 34a oberhalb der Lagerstellen 38a, 40a der Sitzstrukturelemente 26a, 28a aus. Das schwenkbare Rückenlehnenelement 36a bildet lediglich einen oberen Bereich der Rückenlehne 34a aus. Das schwenkbare Rückenlehnenelement 36a ist als ein oberes Rückenlehnenelement ausgebildet. Das schwenkbare Rückenlehnenelement 36a bildet in einem Bereich oberhalb der Armlehnenhöhe X die Rückenlehnenabstützfläche der Rückenlehne 34a aus. Das schwenkbare Rückenlehnenelement 36a ist vorzugsweise im Wesentlichen lediglich in einem Bereich oberhalb der Armlehnenhöhe X angeordnet. Lediglich Bereiche zur Anbindung des Rückenlehnenelements 36a an die Sitzstrukturelemente 26a, 28a erstreckt sich unterhalb der Armlehnenhöhe X.

Die Rückenlehne 34a weist ein unteres Rückenlehnenelement 52a auf. Das untere Rückenlehnenelement 52a ist starr ausgebildet. Das untere Rückenlehnenelement 52a ist vorzugsweise unbeweglich ausgebildet. Das untere Rückenlehnenelement 52a bildet einen unteren Bereich der Rückenlehne 34a aus. Das untere Rückenlehnenelement 52a bildet in dem unteren Bereich der Rückenlehne 34a die Rückenlehnenabstützfläche aus. Das untere Rückenlehnenelement 52a ist fest an den Sitzstrukturelemente 26a, 28a befestigt. Das untere Rückenlehnenelement 52a erstreckt sich im Wesentlichen zwischen einer Höhe der Querträger 22a, 24a der Aufständereinheit 12a und einem unteren Ende des schwenkbaren Rückenlehnenelements 36a. Das untere Rückenlehnenelement 52a erstreckt sich vorzugsweise bis knapp unterhalb der Armlehnenhöhe X. Das untere Rückenlehnenelement 52a erstreckt sich von einer Höhe der Querträger 22a, 24a bis auf eine Höhe von ca. 450 mm bis 700 mm von der Aufständerebene gemessen. Das untere Rückenlehnenelement 52a erstreckt sich vorzugsweise bis auf eine Höhe von 600 mm von der Aufständerebene gemessen.

Das untere Rückenlehnenelement 52a ist von einem Schalenelement gebildet. Das untere Rückenlehnenelement 52a ist von einer Schale aus einem faserverstärkten Kunststoff gebildet. Beispielsweise ist es denkbar, dass das untere Rückenlehnenelement 52a von einer GFK- oder einer CFK- Schale ausgebildet ist. Das untere Rückenlehnenelement 52a weist vorzugsweise eine leicht gekrümmte Form auf. Das untere Rückenlehnenelement 52a ist seitlich über jeweils zwei Befestigungselemente 54a mit einem der Sitzstrukturelemente 26a, 28a verbunden. Grundsätzlich wäre es auch denkbar, dass das untere Rückenlehnenelement 52a zumindest teilweise einstückig mit einem Sitzboden 32a, insbesondere einer Sitzschale ausgebildet ist. Grundsätzlich wäre es ebenso denkbar, dass das untere Rückenlehnenelement 52a zumindest teilweise oder ganz von einer Bespannung ausgebildet ist.

Die Passagiersitzvorrichtung weist ein Rückstellmodul 56a auf. Das Rückstellmodul 56a ist zu einer Rückstellung der Rückenlehne 34a aus der Komfortstellung in eine aufrechte Sitzstellung vorgesehen. Das Rückstellmodul 56a ist zu einer Rückstellung der Rückenlehne 34a aus ihrer verschwenkten Sitzstellung in die aufrechte Sitzstellung vorgesehen. Das Rückstellmodul 56a ist zur Rückstellung des schwenkbaren Rückenlehnenelements 36a vorgesehen. Das Rückstellmodul 56a ist zur Rückstellung der Rückenlehne 34a, insbesondere zur Rückstellung des schwenkbaren Rückenlehnenelements 36a, dazu vorgesehen, eine Rückstellkraft bereitzustellen. Das Rückstellmodul 56a ist zur Rückstellung der Rückenlehne 34a dazu vorgesehen, eine Rückstellkraft auf das schwenkbare Rückenlehnenelement 36a auszuüben. Das Rückstellmodul 56a ist zumindest im Wesentlichen in einem Bereich oberhalb der Lagerstellen 38a, 40a der Sitzstrukturelemente 26a, 28a angeordnet. Das Rückstellmodul 56a ist zumindest im Wesentlichen oberhalb, also auf einer der Aufständerebene abgewandten Seite, der Armlehnenhöhe X angeordnet. Das Rückstellmodul 56a ist zumindest zu einem Großteil oberhalb des Kniebereichs 50a der Rückenlehne 34a angeordnet. Durch diese Anordnung des Rückstellmoduls 56a kann der Kniebereich 50a der Rückenlehne 34a vorzugsweise im Wesentlichen frei von Bauteilen des Rückstellmoduls 56a bleiben. Insbesondere können größere Bauteile des Rückstellmoduls 56a vorteilhaft oberhalb der Armlehnenhöhe X und damit außerhalb des Kniebereichs 50a der Rückenlehne 34a angeordnet werden.

Das Rückstellmodul 56a weist zur Bereitstellung einer Rückstellkraft ein Blattfederelement 58a auf. Grundsätzlich wäre es auch denkbar, dass das Rückstellmodul 56a zur Bereitstellung der Rückstellkraft mehrere Blattfederelemente 58a aufweist. Das Blattfederelement 58a ist dazu vorgesehen, eine Federkraft auf das schwenkbare Rückenlehnenelement 36a auszuüben, um dieses in Richtung seiner aufrechten Sitzstellung zu schwenken. Die Federkraft des Blattfederelements 58a bildet die Rückstellkraft des Rückstellmoduls 56a. In einem Beispiel, das nicht unter den Geltungsbereich der Ansprüche fällt, ist das Blattfederelement 58a funktionstechnisch zwischen dem schwenkbaren Rückenlehnenelement 36a und der Aufständereinheit 12a angeordnet. Das Blattfederelement 58a ist in diesem Beispiel dazu vorgesehen, sich an der Aufständereinheit 12a mit einer ersten Seite abzustützen. Das Blattfederelement 58a ist dazu vorgesehen, sich mit einer zweiten Seite an der Rückenlehne 34a, insbesondere an dem schwenkbaren Rückenlehnenelement 36a, abzustützen. Dadurch kann das Blattfederelement 58a eine Rückstellkraft von der feststehenden Aufständereinheit 12a auf das schwenkbare Rückenlehnenelement 36a übertragen.

Das Blattfederelement 58a ist als ein längliches Bauteil ausgebildet. Das Blattfederelement 58a ist funktionstechnisch zwischen dem unterem Rückenlehnenelement 52a und dem schwenkbaren Rückenlehnenelement 36a angeordnet. Das Blattfederelement 58a ist mit seinem ersten, unteren Ende an dem unteren Rückenlehnenelement 52a angebunden. Das Blattfederelement 58a stützt sich mit seinem unteren Ende an dem unteren Rückenlehnenelement 52a ab. Das Blattfederelement 58a ist in einem oberen Bereich des unteren Rückenlehnenelements 52a angebunden. Das Blattfederelement 58a erstreckt sich also teilweise in einen Bereich unterhalb der Drehachse 44a, also der Armlehnenhöhe X. Das Blattfederelement 58a ist mit einem zweiten, oberen Ende an dem schwenkbaren Rückenlehnenelement 36a angebunden. Das Blattfederelement 58a stützt sich mit seinem zweiten, oberen Ende an dem schwenkbaren Rückenlehnenelement 36a ab. Das Blattfederelement 58a erstreckt sich vorzugsweise bis in einen mittleren Bereich des schwenkbaren Rückenlehnenelements 52a.

Zur Anbindung des Blattfederelements 58a an das schwenkbare Rückenlehnenelement 36a weist das Rückstellmodul 56a eine erste Befestigungseinheit 64a auf. Über die erste Befestigungseinheit 64a ist das Blattfederelement 58a fest an das schwenkbare Rückenlehnenelement 36a angebunden. Über die erste Befestigungseinheit 64a ist das Blattfederelement 58a starr und unbeweglich mit dem schwenkbaren Rückenlehnenelement 36a verbunden. Grundsätzlich wäre es auch denkbar, dass das Blattfederelement 58a über die erste Befestigungseinheit 64a zumindest in einem Freiheitsgrad beweglich mit dem schwenkbaren Rückenlehnenelement 36a verbunden ist. Ferner wäre ebenso denkbar, dass das Blattfederelement 58a mit seinem oberen Ende lediglich an dem schwenkbaren Rückenlehnenelement 36a anliegt. Dabei wäre denkbar, dass das Blattfederelement 58a mit seinem oberen Ende auf dem schwenkbaren Rückenlehnenelement 36a, insbesondere auf einer Rückseite des Schalenelements 62a, gleitet. Das schwenkbare Rückenlehnenelement 36a weist einen Querträger 66a auf. Der Querträger 66a ist in einem Bereich oberhalb der Lagerstellen 38a, 40a angeordnet. Der Querträger 66a ist in Vertikalrichtung betrachtet in etwa in einer Mitte des schwenkbaren Rückenlehnenelements 36a angeordnet. Der Querträger 66a ist zwischen den seitlichen Rahmenelementen des Rückenlehnenrahmens 60a angebunden. Der Querträger 66a erstreckt sich zwischen den seitlichen Rahmenelementen des Rückenlehnenrahmens 60a. Der Querträger 66a ist jeweils fest mit dem jeweiligen seitlichen Rahmenelement des Rückenlehnenrahmens 60a verbunden. Der Querträger 66a ist vorzugsweise mit den seitlichen Rahmenelementen des Rückenlehnenrahmens 60a verschraubt. Grundsätzlich wäre es auch denkbar, dass der Querträger 66a mit den seitlichen Rahmenelementen des Rückenlehnenrahmens 60a verklebt, oder auf eine andere Weise form-, kraft- und/oder stoffschlüssig verbunden ist. Der Querträger 66a ist vorzugsweise zur Versteifung des Rückenlehnenrahmens 60a, insbesondere zur Versteifung des gesamten schwenkbaren Rückenlehnenelements 36a vorgesehen. Vorzugsweise kann der Querträger 66a dazu vorgesehen sein, dass an ihm weitere Anbauelemente der Rückenlehne 34a daran befestigt sind. Beispielsweise wäre es denkbar, dass an den Querträger 66a ein schwenkbares Tischelement, ein Cupholder, ein Tablethalter oder eine hohe Literaturtasche an die Rückenlehne 34a, insbesondere das schwenkbare Rückenlehnenelement 36a angebunden sind. Das Blattfederelement 58a ist zur Übertragung der Rückstellkraft an den Querträger 66a angebunden. Das Blattfederelement 58a ist über die Befestigungseinheit 64a direkt an den Querträger 66a angebunden. Durch den Querträger 66a kann die von dem Blattfederelement 58a bereitgestellte Rückstellkraft gleichmäßig auf beide Seiten des schwenkbaren Rückenlehnenelements 36a übertragen werden.

Zur Anbindung des Blattfederelements 58a an das untere Rückenlehnenelement 52a weist das Rückstellmodul 56a eine zweite Befestigungseinheit 68a auf. Über die zweite Befestigungseinheit 68a ist das Blattfederelement 58a fest an das untere Rückenlehnenelement 52a angebunden. Über die zweite Befestigungseinheit 68a ist das Blattfederelement 58a beweglich an das untere Rückenlehnenelement 52a angebunden. Die zweite Befestigungseinheit 68a weist einen Befestigungsgrundkörper 70a auf. Der Befestigungsgrundkörper 70a ist fest an eine Rückseite des unteren Rückenlehnenelements 52a angebunden. Der Befestigungsgrundkörper 70a der zweiten Befestigungseinheit 68a weist eine Aufnahme auf, die dazu vorgesehen ist, das Blattfederelement 58a aufzunehmen. Das Blattfederelement 58a ist in der Aufnahme des Befestigungsgrundkörpers 70a verschiebbar gelagert. Die Aufnahme des Befestigungsgrundkörpers 70a bildet eine Verschiebeachse aus, entlang der das Blattfederelement 58a verschiebbar gelagert ist. Die Verschiebeachse ist in einem montierten Zustand vertikal ausgerichtet. Die Befestigungseinheit 68a weist zwei Befestigungselemente 72a, 74a auf, die das Blattfederelement 58a an den Befestigungsgrundkörper 70a anbinden. Die Befestigungselemente 72a, 74a sind als Befestigungsschrauben ausgebildet. Grundsätzlich wäre es auch denkbar, dass die Befestigungselemente 72a, 74a auf eine andere Weise ausgebildet sind. Zur Anbindung an den Befestigungsgrundkörper 70a weist das Blattfederelement 58a zwei Durchgangsnuten 76a, 78a auf. Die Befestigungselemente 72a, 74a sind zur Anbindung des Blattfederelements 58a durch die Durchgangsnuten 76a, 78a geführt.

Das Blattfederelement 58a ist zumindest teilweise in das schwenkbare Rückenlehnenelement 36a integriert. Das Blattfederelement 58a ist in das Schalenelement 62a des schwenkbaren Rückenlehnenelements 36a teilweise integriert. Das Blattfederelement 58a ist dazu vorgesehen, in das Schalenelement 62a des schwenkbaren Rückenlehnenelements 36a aufgenommen zu werden. Das Schalenelement 62a des schwenkbaren Rückenlehnenelements 36a weist einen Mittelbereich 80a auf. Der Mittelbereich 80a ist in Bezug auf eine Querrichtung mittig zwischen den seitlichen Rahmenelementen des Rückenlehnenrahmens 60a angeordnet. Das Blattfederelement 58a ist zumindest teilweise in den Mittelbereich 80a des Schalenelements 62a integriert. Das Schalenelement 62a weist auf seiner Rückseite in dem Mittelbereich 80a einen Aufnahmebereich 82a für das Blattfederelement 58a auf. Der Aufnahmebereich 82a erstreckt sich in dem Mittelbereich 80a, von einem unteren Ende des Schalenelements 62a bis in einen Bereich unterhalb des Querträgers 66a. Grundsätzlich ist es ebenso denkbar, dass das Blattfederelement 58a in dem Mittelbereich 80a lediglich auf der Rückseite des Schalenelements 62a aufliegt. Ebenso wäre denkbar, dass das Blattfederelement 58a das Schalenelement 62a in dem Mittelbereich 80a nicht kontaktiert.

Das schwenkbare Rückenlehnenelement 36a weist in einem unteren Bereich sich von dem Mittelbereich 80a jeweils seitlich nach außen erstreckende elastische Rippen 84a, 86a auf. Beispielhaft sind in dem Ausführungsbeispiel je Seite jeweils drei elastische Rippen 84a, 86a dargestellt. Die elastischen Rippen 84a, 86a erstrecken sich von dem Mittelbereich 80a jeweils bis an die seitlichen Rahmenelemente des Rückenlehnenrahmens 60a. Die auf einer Seite des Mittelbereichs 80a benachbart angeordneten Rippen 84a, 86a sind in Vertikalrichtung jeweils voneinander beabstandet. Die elastischen Rippen 84a, 86a sind jeweils unabhängig voneinander elastisch verformbar. Die elastischen Rippen 84a, 86a weisen jeweils eine in Sitzrichtung nach vorne gekrümmte Form auf. Die elastischen Rippen 84a, 86a sind vorzugsweise einstückig mit dem Schalenelement 62a, insbesondere mit dem Mittelbereich 80a, ausgebildet. Grundsätzlich wäre es ebenso denkbar, dass die elastischen Rippen 84a, 86a zumindest teilweise getrennt von dem Schalenelement 62a ausgebildet sind. Dabei wäre es insbesondere denkbar, dass die Rippen 84a, 86a teilweise als separate Elemente ausgebildet sind, die mit dem Schalenelement 62a, insbesondere dem Mittelbereich 80a des Schalenelements 62a, verbunden sind. Dabei ist insbesondere denkbar, dass die getrennt ausgebildeten Rippen 84a, 86a demontierbar an dem Schalenelement 62a anbindbar sind. Dadurch könnten die Rippen 84a, 86a vorteilhaft einfach ausgetauscht werden, wenn diese beschädigt sind. Vorzugsweise können durch die demontierbar ausgebildeten Rippen 84a, 86a an unterschiedlichen Stellen des schwenkbaren Rückenlehnenelements 36a besonders einfach Rippen 84a, 86a mit unterschiedlichen Steifigkeiten angebracht werden. Dadurch kann das schwenkbare Rückenlehnenelement 36a in unterschiedlichen Teilbereichen besonders einfach und unterschiedlich steif ausgebildet werden. Vorzugsweise können durch die demontierbar ausgebildeten Rippen 84a, 86a an unterschiedlichen Stellen des schwenkbaren Rückenlehnenelements 36a einfach unterschiedlich ausgeformte Rippen 84a, 86a angeordnet werden. Dadurch kann das schwenkbare Rückenlehnenelement 36a besonders einfach mit unterschiedlichen bzw. anpassbaren Ergonomien ausgebildet werden.

Das Rückstellmodul 56a weist eine Verriegeleinheit 88a auf. Die Verriegeleinheit 88a ist dazu vorgesehen, das Rückstellmodul 56a zu verriegeln, bzw. zu entriegeln. Die Verriegeleinheit 88a ist dazu vorgesehen, die Rückenlehne 34a, also das schwenkbare Rückenlehnenelement 36a, zumindest in der aufrechten Sitzstellung und in der Komfortstellung zu verriegeln. Vorzugsweise ist es ebenso denkbar, dass die Verriegeleinheit 88a dazu vorgesehen ist, das schwenkbare Rückenlehnenelement 36a in weiteren Stellungen zu verriegeln. Die weiteren Stellungen des schwenkbaren Rückenlehnenelements 36a sind dabei insbesondere als verschwenkte Stellungen ausgebildet, die zwischen der aufrechten Sitzstellung und der Komfortstellung liegen. Die Verriegeleinheit 88a weist einen Verriegelzustand und einen Entriegelzustand auf. In ihrem Verriegelzustand verriegelt die Verriegeleinheit 88a das Rückstellmodul 56a und das Rückstellmodul 56a kann keine Rückstellkraft auf das schwenkbare Rückenlehnenelement 36a ausüben. In ihrem Entriegelzustand entriegelt die Verriegeleinheit 88a das Rückstellmodul 56a und das Rückstellmodul 56a kann die Rückstellkraft auf das schwenkbare Rückenlehnenelement 36a ausüben. Die Verriegeleinheit 88a ist dazu vorgesehen, das schwenkbare Rückenlehnenelement 36a in seinem Verriegelzustand in seiner aktuellen Stellung zu verriegeln. In dem Verriegelzustand der Verriegeleinheit 88a ist das schwenkbare Rückenlehnenelement 36a in seiner aktuellen Stellung arretiert. In dem Verriegelzustand der Verriegeleinheit 88a ist das schwenkbare Rückenlehnenelement 36a nicht verschwenkbar. In dem Verriegelzustand der Verriegeleinheit 88a ist das schwenkbare Rückenlehnenelement 36a vorzugsweise relativ zu der Aufständereinheit 12a fixiert. Vorzugsweise ist das schwenkbare Rückenlehnenelement 36a in dem Verriegelzustand der Verriegeleinheit 88a relativ zu den Sitzstrukturelementen 26a, 28a fest fixiert.

Die Verriegeleinheit 88a ist funktionstechnisch vorzugsweise zwischen dem schwenkbaren Rückenlehnenelement 36a, insbesondere dem Rückenlehnenrahmen 60a, und einem der Sitzstrukturelemente 26a, 28a angeordnet. Grundsätzlich ist es ebenso denkbar, dass die Verriegeleinheit 88a funktionstechnisch zwischen dem Rückenlehnenrahmen 60a und den beiden Sitzstrukturelementen 26a, 28a angeordnet ist. Die Verriegeleinheit 88a weist vorzugsweise zumindest ein Verriegelelement auf. Das Verriegelelement der Verriegeleinheit 88a ist vorzugsweise dazu vorgesehen, das Rückstellmodul 56a in dem Verriegelzustand der Verriegeleinheit 88a zu verriegeln. Das Verriegelelement der Verriegeleinheit 88a ist vorzugsweise dazu vorgesehen, direkt das schwenkbare Rückenlehnenelement 36a zu verriegeln. Das Verriegelelement der Verriegeleinheit 88a ist zu einer formschlüssigen Verriegelung des schwenkbaren Rückenlehnenelements 36a vorgesehen. Das Verriegelelement der Verriegeleinheit 88a ist dazu vorgesehen, in dem Verriegelzustand der Verriegeleinheit 88a formschlüssig in ein korrespondierendes Formschlusselement der Verriegeleinheit 88a einzugreifen. Die Verriegeleinheit 88a weist für jede arretierbare Stellung, also für die aufrechten Sitzstellung und für die Komfortstellung des schwenkbaren Rückenlehnenelements 36a, ein korrespondierendes Formschlusselement auf. Grundsätzlich wäre es auch denkbar, dass die Verriegeleinheit 88a dazu vorgesehen ist, das schwenkbare Rückenlehnenelement 36a kraftschlüssig zu verriegeln und dazu zumindest ein Kraftschlusselement aufweist. Grundsätzlich wäre es ebenso denkbar, dass die Verriegeleinheit 88a zu einer kraft- und formschlüssigen Verriegelung des schwenkbaren Rückenlehnenelements 36a vorgesehen ist. Die Verriegeleinheit 88a weist ein Betätigungselement 90a auf, mittels dessen die Verriegeleinheit 88a von dem Verriegelzustand in den Entriegelzustand gebracht verstellt werden kann. Das Betätigungselement 90a ist dazu vorgesehen, von einem auf dem Passagiersitz 10a sitzenden Passagier betätigt zu werden. Das Betätigungselement 90a ist vorzugsweise als ein Druckknopf ausgebildet. Das Betätigungselement 90a ist über ein geeignetes Verbindungselement, wie insbesondere einen Bowdenzug, mit dem Verriegelelement der Verriegeleinheit 88a gekoppelt, um dieses zwischen seiner Verriegelstellung und Entriegelstellung zu verstellen.

Die Verriegeleinheit 88a ist oberhalb des Kniebereichs 50a der Rückenlehne 34a angeordnet. Die Verriegeleinheit 88a ist vorzugsweise in einem Bereich oberhalb der Lagerstellen 38a, 40a der Sitzstrukturelemente 26a, 28a angeordnet. Die Verriegeleinheit 88a ist vorzugsweise im Wesentlichen, also zu einem Großteil, oberhalb der Armlehnenhöhe X angeordnet. Die Verriegeleinheit 88a ist in einem Bereich des schwenkbaren Rückenlehnenelements 36a angeordnet. Die Verriegeleinheit 88a ist vorzugsweise außerhalb eines Bereichs des unteren Rückenlehnenelements 52a angeordnet. Insbesondere das Verriegelelement und die korrespondierend ausgebildeten Formschlusselemente der Verriegeleinheit 88a zur Verriegelung des schwenkbaren Rückenlehnenelements 36a sind oberhalb der Lagerstellen 38a, 40a und der Armlehnenhöhe X angeordnet. Einzelne Bestandtele der Verriegeleinheit 88a, wie insbesondere das Betätigungselement 90a, sowie ein Bowdenzug können auch teilweise unterhalb der Armlehnenhöhe X angeordnet sein.

Die Passagiersitzvorrichtung weist zwei Armlehnen 92a, 94a auf. Die Armlehnen 92a, 94a sind Teil des Passagiersitzes 10a der Passagiersitzreihe 14a. Die Armlehnen 92a, 94a sind jeweils seitlich des Sitzbereichs 30a des Passagiersitzes 10a angeordnet. Die Armlehnen 92a, 94a sind auf der Armlehnenhöhe X angebunden. Die Armlehnen 92a, 94a sind mit einem hinteren Ende in der Armlehnenhöhe X an die Aufständereinheit 12a angebunden. Die Armlehnen 92a, 94a sind über die Sitzstrukturelemente 26a, 28a angebunden. Die Armlehnen 92a, 94a sind über die Lagerstellen 38a, 40a der als Sitzteiler ausgebildeten Sitzstrukturelemente 26a, 28a an den Passagiersitz 10a angebunden. Die Armlehnen 92a, 94a sind über die Lagerbolzen 46a, 48a der Lagervorrichtung 42a der Rückenlehne 34a an die Sitzstrukturelemente 26a, 28a angebunden. Die Armlehnen 92a, 94a sind über die gleichen Lagerbolzen 46a, 48a an die Sitzstrukturelemente 26a, 28a angebunden wie das schwenkbare Rückenlehnenelement 36a. Die Armlehnen 92a, 94a sind vorzugsweise schwenkbar an die Sitzstrukturelemente 26a, 28a angebunden. Die Armlehnen 92a, 94a sind über die gleiche Drehachse 44a schwenkbar wie das schwenkbare Rückenlehnenelement 36a. Grundsätzlich wäre es auch denkbar, dass die Armlehnen 92a, 94a drehfest an die Sitzstrukturelemente 26a, 28a angebunden sind. Das Betätigungselement 90a der Verriegeleinheit 88a ist vorzugsweise in eine der Armlehnen 92a, 94a eingebracht.

Alternativ wäre es auch denkbar, dass das Blattfederelement 58a direkt an die Aufständereinheit 12a angebunden ist. Dabei wäre es denkbar, dass das Blattfederelement 58a anstatt an das untere Rückenlehnenelement 52a direkt an den hinteren Querträger 24a der Aufständereinheit 12a angebunden ist. Dabei wäre es denkbar, dass das Blattfederelement 58a in einem seitlichen Bereich, direkt im Bereich eines der seitlich angeordneten Sitzstrukturelemente 26a, 28a, angeordnet ist. Dadurch könnte ein Mittelbereich des Kniebereichs 50a der Rückenlehne 34 vorteilhaft frei von dem Blattfederelement 58a ausgebildet werden.

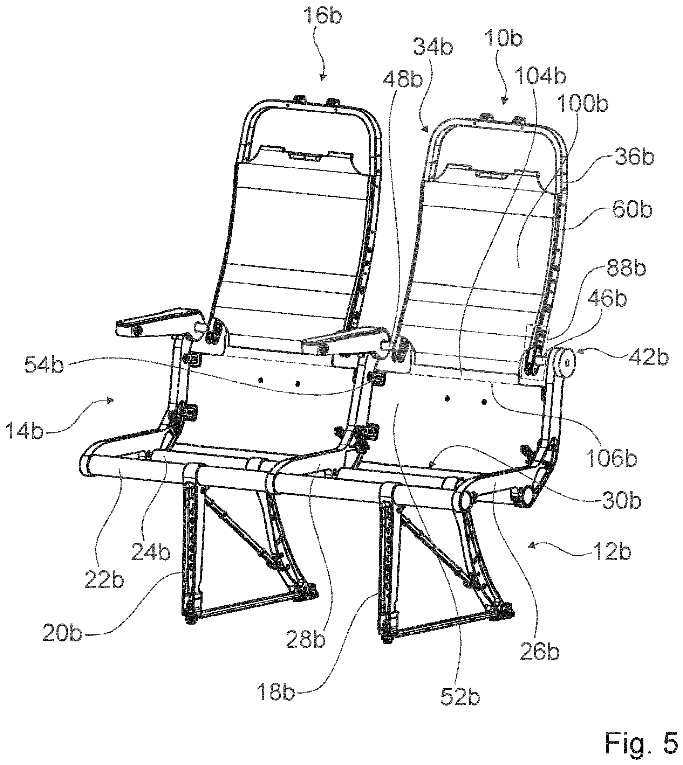

In den Figuren 5 bis 10 sind fünf weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Fig. 1 bis 4, verwiesen werden kann. Zur Unterscheidung der Ausführungsbeispiele ist der Buchstabe a den Bezugszeichen des Ausführungsbeispiels in Fig. 1 bis 4 nachgestellt. In den Ausführungsbeispielen der Fig. 5 bis 10 ist der Buchstabe a durch die Buchstaben b bis f ersetzt.

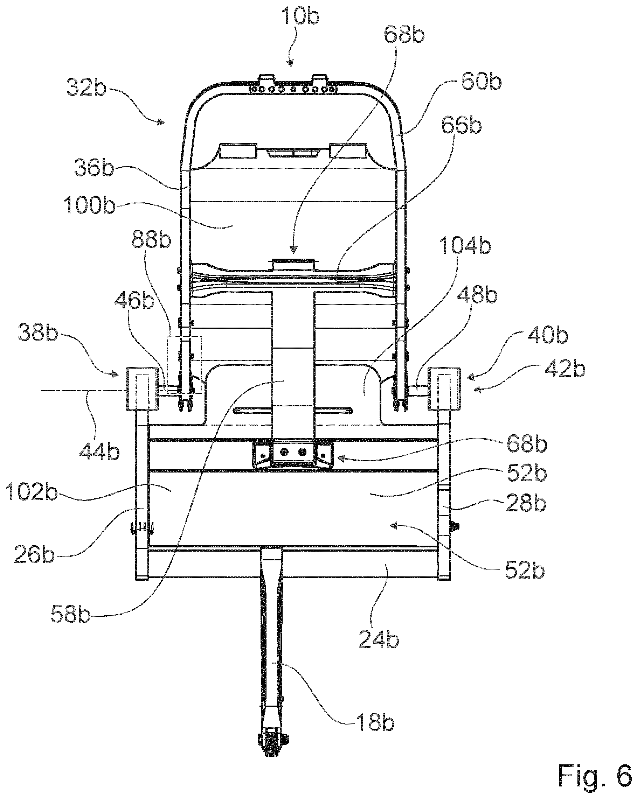

Die Figuren 5 und 6 zeigen ein zweites Ausführungsbeispiel einer erfindungsgemäßen Passagiersitzvorrichtung. Die Passagiersitzvorrichtung ist dabei Teil eines Passagiersitzes 10b. Der Passagiersitz 10b ist in einem montierten Zustand in einer Flugzeugkabine eines Flugzeugs aufgeständert. Die Passagiersitzvorrichtung weist eine Aufständereinheit 12b auf. Mittels der Aufständereinheit 12b ist der Passagiersitz 10b auf dem Kabinenboden der Flugzeugkabine aufständerbar. Der Passagiersitz 10b ist als ein Teil einer Passagiersitzreihe 14b ausgebildet. Die beispielhaft gezeigte Passagiersitzreihe 14b weist einen zweiten Passagiersitz 16b auf. Die Aufständereinheit 12b ist dabei als eine gemeinsame Aufständereinheit der Passagiersitze 10b, 16b einer Passagiersitzreihe 14b ausgebildet. Die Aufständereinheit 12b umfasst zwei Sitzfüße 18b, 20b. Die Aufständereinheit 12b weist zwei Querträger 22b, 24b auf.

Die Passagiersitzvorrichtung weist zwei Sitzstrukturelemente 26b, 28b auf. Die zwei Sitzstrukturelemente 26b, 28b sind jeweils auf einer Seite eines Sitzbereichs 30b der Passagiersitzvorrichtung angeordnet. Die zwei Sitzstrukturelemente 26b, 28b sind jeweils seitlich eines Sitzbereichs 30b, den der Passagiersitz 10b ausbildet, angeordnet. Die Sitzstrukturelemente 26b, 28b sind als Sitzteiler ausgebildet. Die Sitzstrukturelemente 26b, 28b sind an den Querträgern 22b, 24b angeordnet. Die Sitzstrukturelemente 26b, 28b sind im Wesentlichen L-förmig ausgebildet. Die Sitzstrukturelemente 26b, 28b erstrecken sich also in ihrem hinteren Bereich nach oben, von der Aufständereinheit 12b, insbesondere der Aufständerebene, weg. Die Sitzstrukturelemente 26b, 28b erstrecken sich in ihrem hinteren Bereich nach oben bis im Wesentlichen auf eine Armlehnenhöhe X. Die Sitzstrukturelemente 26b, 28b erstrecken sich bis auf eine Armlehnenhöhe X des Passagiersitzes 10b.

Die Passagiersitzvorrichtung umfasst eine Rückenlehne 34b. Die Rückenlehne 34b ist dazu vorgesehen, dass eine Person, die auf dem Passagiersitz 10b sitzt, dessen Teil die Passagiersitzvorrichtung ist, ihren Rücken an der Rückenlehne 34b abstützen kann. Die Rückenlehne 34b ist schwenkbar zu der Aufständereinheit 12b angeordnet. Die Rückenlehne 34b ist an die Sitzstrukturelemente 26b, 28b angebunden. Die Rückenlehne 34b ist dazu vorgesehen, zwischen einer aufrechten Sitzstellung und einer Komfortstellung verschwenkt zu werden. Die Rückenlehne 34b weist ein schwenkbares Rückenlehnenelement 36b auf. Das schwenkbare Rückenlehnenelement 36b ist schwenkbar an der Aufständereinheit 12b gelagert. Das schwenkbare Rückenlehnenelement 36b ist schwenkbar an den Sitzstrukturelementen 26b, 28b angebunden. Die Sitzstrukturelementen 26b, 28b weisen jeweils eine Lagerstelle 38b, 40b zur Lagerung der Rückenlehne 34b auf. Die Lagerstellen 38b, 40b sind dazu vorgesehen, dass das schwenkbare Rückenlehnenelement 36b daran gelagert wird.

Die Passagiersitzvorrichtung weist eine Lagervorrichtung 42b auf. Die Lagervorrichtung 42b ist dazu vorgesehen, die Rückenlehne 34b verschwenkbar zwischen der aufrechten Sitzstellung und der Komfortstellung zu lagern. Die Lagervorrichtung 42b ist dazu vorgesehen, das schwenkbare Rückenlehnenelement 36b verschwenkbar zwischen der aufrechten Sitzstellung und der Komfortstellung zu lagern. Die Lagervorrichtung 42b bildet die Drehachse 44b aus. Das schwenkbare Rückenlehnenelement 36b ist mittels der Lagervorrichtung 42b um die Drehachse 44b schwenkbar. Die Lagervorrichtung 42b weist zwei Lagerbolzen 46b, 48b auf. Die Lagerbolzen 46b,48b bilden die Drehachse 44b aus. Die Lagerbolzen 46b, 48b sind jeweils mit einer der Lagerstellen 38b, 40b eines der Sitzstrukturelemente 26b, 28b verbunden.

Das schwenkbare Rückenlehnenelement 36b weist einen Rückenlehnenrahmen 60b auf. Der Rückenlehnenrahmen 60b bildet eine tragende Struktur des schwenkbaren Rückenlehnenelements 36b aus. Der Rückenlehnenrahmen 60b ist als ein umlaufender Rahmen ausgebildet. Der Rückenlehnenrahmen 60b ist vorzugsweise im Wesentlichen U-förmig ausgebildet. Der Rückenlehnenrahmen 60b weist zwei seitliche Rahmenelemente und ein oberes Rahmenelement auf, das die beiden seitlichen Rahmenelemente an einem oberen Ende des Rückenlehnenrahmens 60b verbindet. An einem unteren Ende ist der Rückenlehnenrahmen 60b vorzugsweise offen. Das untere Ende des Rückenlehnenrahmens 60b bildet ein unteres Ende des schwenkbaren Rückenlehnenelements 36b aus. Die Lagerbolzen 46b, 48b sind jeweils an einem unteren Ende des Rückenlehnenrahmens 60b an dem zugewandten seitlichen Rahmenelement an den Rückenlehnenrahmen 60b des schwenkbaren Rückenlehnenelements 36b angebunden.

Die Rückenlehne 34b ist als eine Rückenlehne mit einem hohen Rückenlehnendrehpunkt ausgebildet. Der Rückenlehnendrehpunkt, also die Drehachse 44b der Lagervorrichtung 42b, ist oberhalb eines Kniebereichs 50b des Passagiersitzes 10b angeordnet. Zur Ausbildung des hohen Rückenlehnendrehpunkts bilden die Sitzstrukturelemente 26b, 28b ihre Lagerstellen 38b, 40b zur Lagerung der Rückenlehne 34b in einem hohen Bereich aus. Die Lagerstellen 38b, 40b der Sitzstrukturelemente 26b, 28b sind oberhalb des Kniebereichs 50b angeordnet. Die Lagerstellen 38b, 40b der Sitzstrukturelemente 26b, 28b sind in der Armlehnenhöhe X angeordnet.

Im Unterschied zu dem ersten Ausführungsbeispiel weist das schwenkbare Rückenlehnenelement 36b eine Bespannung 100b auf. Die Bespannung 100b ist auf den Rückenlehnenrahmen 60b aufgespannt. Die Bespannung 100b ist von einem Textil gebildet, das zwischen den seitlichen Rahmenelementen des Rückenlehnenrahmens 60b aufgespannt ist. Grundsätzlich ist es denkbar, dass die Bespannung 100b auch an einem oberen Rahmenelement des Rückenlehnenrahmens 60b angebunden ist. Die Bespannung 100b erstreckt sich von einem unteren Ende des Rückenlehnenrahmens 60b bis in einen oberen Endbereich des Rückenlehnenrahmens 60b.

Die Rückenlehne 34b weist ein unteres Rückenlehnenelement 52b auf. Das untere Rückenlehnenelement 52b ist starr ausgebildet. Das untere Rückenlehnenelement 52b ist vorzugsweise unbeweglich ausgebildet. Das untere Rückenlehnenelement 52b bildet einen unteren Bereich der Rückenlehne 34b aus. Das untere Rückenlehnenelement 52b bildet in dem unteren Bereich der Rückenlehne 34b die Rückenlehnenabstützfläche aus. Das untere Rückenlehnenelement 52b ist fest an den Sitzstrukturelementen 26b, 28b befestigt. Das untere Rückenlehnenelement 52b ist von einem Schalenelement gebildet.

Das untere Rückenlehnenelement 52b ist aus einem faserverstärkten Kunststoff ausgebildet. Das untere Rückenlehnenelement 52b ist vorzugsweise aus mehreren Lagen eines faserverstärkten Kunststoffs gebildet. Beispielsweise ist es denkbar, dass das untere Rückenlehnenelement 52b von einer oder mehreren GFK-Schichten oder von einer oder mehreren CFK-Schichten ausgebildet ist. Das untere Rückenlehnenelement 52b weist einen Hauptbereich 102b auf. Der Hauptbereich 102b bildet im Wesentlichen die Rückenlehnenabstützfläche des unteren Rückenlehnenelements 52b aus und ist im Wesentlichen so ausgebildet wie bei dem unteren Rückenlehnenelement des ersten Ausführungsbeispiels. Im Unterschied zu dem ersten Ausführungsbeispiel weist das untere Rückenlehnenelement 52b an seinem oberen Ende eine Lippe 104b auf. Die Lippe 104b schließt direkt an ein oberes Ende des Hauptbereichs 102b des unteren Rückenlehnenelements 52b an. Die Lippe 104b bildet einen oberen Endbereich des unteren Rückenlehnenelements 52b aus. Die Lippe 104b ist einstückig mit dem Rest des unteren Rückenlehnenelements 52b ausgebildet. Die Lippe 104b ist in Querrichtung mittig an dem oberen Ende des unteren Rückenlehnenelements 52b angeordnet. Grundsätzlich wäre es auch denkbar, dass das untere Rückenlehnenelement 52b auch zwei oder mehr außermittig angeordnete Lippen 104b aufweist, die an seinem oberen Ende angeordnet sind. Weist das untere Rückenlehnenelement 52b an seinem oberen Ende mehrere Lippen 104b auf, so sind diese vorzugsweise zu einer Mittelachse des unteren Rückenlehnenelements 52b symmetrisch angeordnet. Die Lippe 104b des unteren Rückenlehnenelements 52b erstreckt sich bis oberhalb der Lagerstellen 38b, 40b zur Lagerung des schwenkbaren Rückenlehnenelements 36b. Die Lippe 104b des unteren Rückenlehnenelements 52b erstreckt sich bis hinter einen Bereich des schwenkbaren Rückenlehnenelements 36b, insbesondere bis hinter die Bespannung 100b des schwenkbaren Rückenlehnenelements 36b. Die Lippe 104b ist dazu vorgesehen, dass die Bespannung 100b des schwenkbaren Rückenlehnenelements 36b mit ihrem unteren Ende daran angebunden werden kann. Die Bespannung 100b ist mit ihrem unteren Ende an eine Vorderseite 106b der Lippe 104b des unteren Rückenlehnenelements 52b angebunden. Die Bespannung 100b ist vorzugsweise mittels eines Flausch- und Hakenbands abnehmbar an die Vorderseite 106b der Lippe 104b angebunden. Grundsätzlich ist es auch denkbar, dass die Bespannung 100b auf eine andere Weise mit der Lippe 104b des unteren Rückenlehnenelements 52b verbunden ist, beispielsweise geklebt ist.

Die Passagiersitzvorrichtung weist ein Rückstellmodul 56b auf. Das Rückstellmodul 56b ist zu einer Rückstellung der Rückenlehne 34b aus der Komfortstellung in eine aufrechte Sitzstellung vorgesehen. Das Rückstellmodul 56b ist zu einer Rückstellung der Rückenlehne 34b aus der verschwenkten Sitzstellung in die aufrechte Sitzstellung vorgesehen. Das Rückstellmodul 56b ist zumindest im Wesentlichen in einem Bereich oberhalb der Lagerstellen 38b, 40b der Sitzstrukturelemente 26b, 28b angeordnet. Das Rückstellmodul 56b ist zumindest im Wesentlichen oberhalb, also auf einer der Aufständerebene abgewandten Seite, der Armlehnenhöhe X angeordnet. Das Rückstellmodul 56b ist zumindest zu einem Großteil oberhalb des Kniebereichs 50b der Rückenlehne 34b angeordnet.

Das Rückstellmodul 56b weist zur Bereitstellung einer Rückstellkraft ein Blattfederelement 58b auf. Das Blattfederelement 58b ist dazu vorgesehen, eine Federkraft auf das schwenkbare Rückenlehnenelement 36b auszuüben, um dieses in Richtung der aufrechten Sitzstellung zu schwenken. Das Blattfederelement 58b ist mit seinem ersten, unteren Ende an dem unteren Rückenlehnenelement 52b angebunden. Das Blattfederelement 58b ist in einem oberen Bereich des unteren Rückenlehnenelements 52b angebunden. Das Blattfederelement 58b ist unterhalb der Lippe 104b in dem Hauptbereich 102b des unteren Rückenlehnenelements 52b angebunden.

Zur Anbindung des Blattfederelements 58b an das schwenkbare Rückenlehnenelement 36b weist das Rückstellmodul 56b eine erste Befestigungseinheit 64b auf. Über die erste Befestigungseinheit 64b ist das Blattfederelement 58b fest an das schwenkbare Rückenlehnenelement 36b angebunden. Das schwenkbare Rückenlehnenelement 36b weist einen Querträger 66b auf. Der Querträger 66b ist in einem Bereich oberhalb der Lagerstellen 38b, 40b angeordnet. Der Querträger 66b ist hinter der Bespannung 100b angeordnet. Das Blattfederelement 58b ist über die Befestigungseinheit 64b direkt an den Querträger 66b angebunden. Zur Anbindung des Blattfederelements 58b an das untere Rückenlehnenelement 52b weist das Rückstellmodul 56b eine zweite Befestigungseinheit 68b auf. Über die zweite Befestigungseinheit 68b ist das Blattfederelement 58b fest an das untere Rückenlehnenelement 52b angebunden. Über die zweite Befestigungseinheit 68b ist das Blattfederelement 58b beweglich an das untere Rückenlehnenelement 52b angebunden.

Das Rückstellmodul 56b weist eine Verriegeleinheit 88b auf. Die Verriegeleinheit 88b ist dazu vorgesehen, das Rückstellmodul 56b zu verriegeln bzw. zu entriegeln. Die Verriegeleinheit 88b ist dazu vorgesehen, die Rückenlehne 34b, also das schwenkbare Rückenlehnenelement 36b, zumindest in der aufrechten Sitzstellung und in der Komfortstellung zu verriegeln. Die Verriegeleinheit 88b ist funktionstechnisch vorzugsweise zwischen dem schwenkbaren Rückenlehnenelement 36b, insbesondere dem Rückenlehnenrahmen 60b, und einem der Sitzstrukturelemente 26b, 28b, angeordnet. Die Verriegeleinheit 88b ist oberhalb des Kniebereichs 50b der Rückenlehne 34b angeordnet. Die Verriegeleinheit 88b ist vorzugsweise in einem Bereich oberhalb der Lagerstellen 38b, 40b der Sitzstrukturelemente 26b, 28b angeordnet. Die Verriegeleinheit 88b ist vorzugsweise im Wesentlichen, also zu einem Großteil, oberhalb der Armlehnenhöhe X angeordnet.

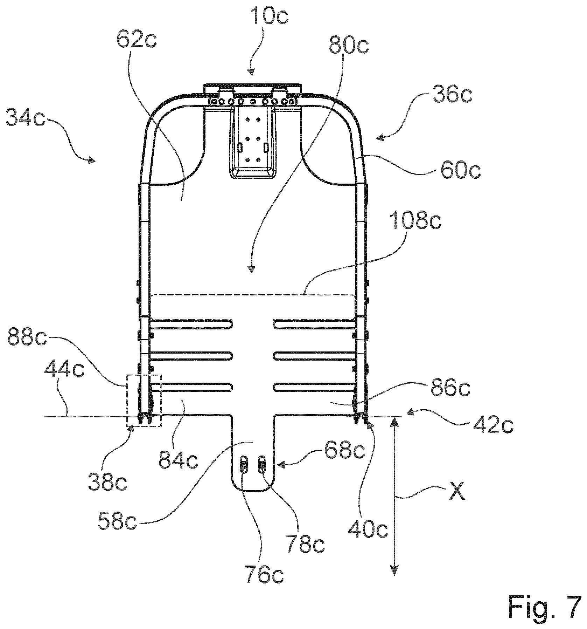

Die Figur 7 zeigt ein drittes Ausführungsbeispiel einer erfindungsgemäßen Passagiersitzvorrichtung. Die Passagiersitzvorrichtung ist Teil eines teilweise dargestellten Passagiersitzes 10c. Der Passagiersitz10c ist im Wesentlichen gleich ausgebildet wie der Passagiersitz des ersten Ausführungsbeispiels aus den Figuren 1 - 4 und soll deshalb hier nicht näher beschrieben werden. Die Passagiersitzvorrichtung weist eine nicht näher dargestellte Aufständereinheit auf. Die Passagiersitzvorrichtung weist zwei nicht näher dargestellte, mit der Aufständereinheit verbundene Sitzstrukturelemente auf, die als Sitzteiler ausgebildet sind. Die Sitzstrukturelemente erstrecken sich bis auf eine Armlehnenhöhe X des Passagiersitzes 10c.

Die Passagiersitzvorrichtung umfasst eine Rückenlehne 34c. Die Rückenlehne 34c bildet eine Rückenlehnenabstützfläche aus. Die Rückenlehne 34c ist an die Sitzstrukturelemente angebunden. Die Rückenlehne 34c ist schwenkbar ausgebildet. Die Rückenlehne 34c ist dazu vorgesehen, zwischen einer aufrechten Sitzstellung und einer Komfortstellung verschwenkt zu werden. Die Rückenlehne 34c weist ein schwenkbares Rückenlehnenelement 36c auf. Die Rückenlehne 34c ist als eine Rückenlehne mit einem hohen Rückenlehnendrehpunkt ausgebildet. Der Rückenlehnendrehpunkt ist von einer Drehachse 44c einer Lagervorrichtung 42c gebildet. Das schwenkbare Rückenlehnenelement 36c ist schwenkbar an die Sitzstrukturelemente angebunden. Die Sitzstrukturelementen weisen jeweils eine Lagerstelle zur Lagerung der Rückenlehne 34c auf. Das schwenkbare Rückenlehnenelement 36c weist einen Rückenlehnenrahmen 60c auf. Der Rückenlehnenrahmen 60c bildet eine tragende Struktur des schwenkbaren Rückenlehnenelements 36c aus. Das schwenkbare Rückenlehnenelement 36c weist ein Schalenelement 62c auf. Das Schalenelement 62c ist als ein plattenartiges Element ausgebildet. Das Schalenelement 62c ist aus einem faserverstärkten Kunststoff gebildet. Das Schalenelement 62c ist beispielsweise aus einem GFK oder einem CFK gebildet. Das Schalenelement 62c ist dazu vorgesehen, die Rückenlehnenabstützfläche des schwenkbaren Rückenlehnenelements 36c auszubilden. Das Schalenelement 62c ist fest mit dem Rückenlehnenrahmen 60c des schwenkbaren Rückenlehnenelements 36c verbunden. Das Schalenelement 62c bildet vorzugsweise eine Rückenlehnenkontur des schwenkbaren Rückenlehnenelements 36c aus. Die Rückenlehne 34c weist ein nicht näher dargestelltes unteres Rückenlehnenelement auf. Das untere Rückenlehnenelement ist ebenfalls von einem Schalenelement gebildet.

Die Passagiersitzvorrichtung weist ein Rückstellmodul 56c auf. Das Rückstellmodul 56c ist zu einer Rückstellung der Rückenlehne 34c aus der Komfortstellung in eine aufrechte Sitzstellung vorgesehen. Das Rückstellmodul 56c ist zur Rückstellung des schwenkbaren Rückenlehnenelements 36c vorgesehen. Das Rückstellmodul 56c ist zur Rückstellung der Rückenlehne 34c, insbesondere zur Rückstellung des schwenkbaren Rückenlehnenelements 36c, dazu vorgesehen, eine Rückstellkraft bereitzustellen. Das Rückstellmodul 56c weist zur Bereitstellung einer Rückstellkraft ein Blattfederelement 58c auf. Im Unterschied zu dem ersten Ausführungsbeispiel ist das Blattfederelement 58c zumindest teilweise einstückig mit dem schwenkbaren Rückenlehnenelement 36c ausgebildet. Das Blattfederelement 58c ist einstückig mit dem Schalenelement 62c des schwenkbaren Rückenlehnenelements 36c ausgebildet. Das Blattfederelement 58c ist von einem Mittelbereich 80c des Schalenelements 62c ausgebildet. Das Blattfederelement 58c ist in den Mittelbereich 80c des Schalenelements 62c integriert. Das Blattfederelement 58c ist in faserverstärkte Lagen des Schalenelements 62c eingebettet. Das Blattfederelement 58c ist vorzugsweise als ein in einem Herstellverfahren in das Schalenelement 62c eingelegtes Blattfederelement gebildet. Grundsätzlich wäre es jedoch auch denkbar, dass das Blattfederelement 58c von den Faserlagen des Schalenelements 62c in dem Mittelbereich 80c selbst gebildet ist. An einem oberen Ende bildet das einstückig mit dem Schalenelement 62c ausgebildete Blattfederelement 58c ein Querversteifungselement 108c aus. Das Querversteifungselement 108c ist einstückig mit dem Blattfederelement 58c und damit dem Schalenelement 62c ausgebildet. Das Querversteifungselement 108c ist wie der Querträger des ersten Ausführungsbeispiels zur besseren Einleitung der Rückstellkraft in das schwenkbare Rückenlehnenelement 36c vorgesehen. Das schwenkbare Rückenlehnenelement 36c weist in diesem Ausführungsbeispiel vorzugsweis kein separaten Querträger auf. Grundsätzlich wäre es auch denkbar, dass das Blattfederelement 58c kein Querversteifungselement 108c aufweist. Das schwenkbare Rückenlehnenelement 36c weist in einem unteren Bereich sich von dem Mittelbereich 80c jeweils seitlich nach außen erstreckende elastische Rippen 84c, 86c auf. Die sich nach außen erstreckenden elastischen Rippen 84c, 86c können vorzugsweise ebenfalls einstückig mit dem Blattfederelement 58c ausgebildet sein. Zur Anbindung des Blattfederelements 58c an das untere Rückenlehnenelement 52c weist das Rückstellmodul 56c eine Befestigungseinheit 68c auf, die gleich ausgebildet ist wie in dem ersten Ausführungsbeispiel. Die Befestigungseinheit 68c ist zumindest von als Langlöchern ausgebildeten Durchgangsnuten 76c, 78c in einem unteren Ende des Blattfederelements 58c ausgebildet.

Das Rückstellmodul 56c weist eine hier nicht näher dargestellte Verriegeleinheit auf, die im Wesentlichen gleich ausgebildet ist wie in den vorhergehenden Ausführungsbeispielen. Die Verriegeleinheit ist funktionstechnisch vorzugsweise zwischen dem schwenkbaren Rückenlehnenelement 36c, insbesondere dem Rückenlehnenrahmen 60c, und einem der Sitzstrukturelemente angeordnet. Die Verriegeleinheit ist vorzugsweise in einem Bereich oberhalb der Lagerstellen der Sitzstrukturelemente angeordnet. Die Verriegeleinheit ist vorzugsweise im Wesentlichen, also zu einem Großteil, oberhalb der Armlehnenhöhe X angeordnet.

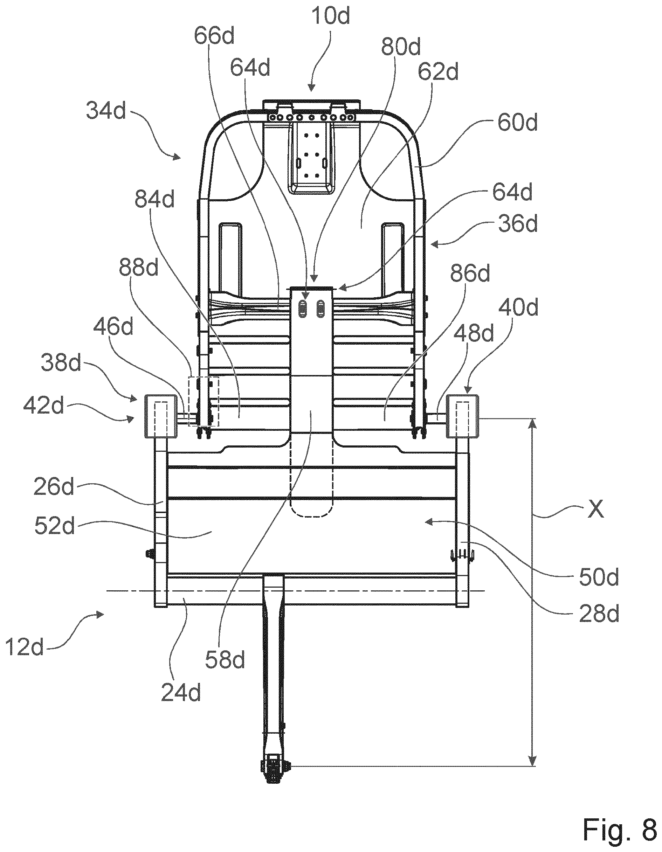

Die Figur 8 zeigt ein viertes Ausführungsbeispiel einer erfindungsgemäßen Passagiersitzvorrichtung. Die Passagiersitzvorrichtung ist Teil eines teilweise dargestellten Passagiersitzes 10d. Die Passagiersitzvorrichtung weist eine Aufständereinheit 12d auf. Mittels der Aufständereinheit 12d ist der Passagiersitz 10d auf dem Kabinenboden der Flugzeugkabine aufständerbar. Die Aufständereinheit 12d weist zwei Querträger 24d auf. Die Passagiersitzvorrichtung weist zwei Sitzstrukturelemente 26d, 28d auf. Die zwei Sitzstrukturelemente 26d, 28d sind jeweils auf einer Seite eines Sitzbereichs 30d der Passagiersitzvorrichtung angeordnet. Die zwei Sitzstrukturelemente 26d, 28d sind jeweils seitlich eines Sitzbereichs 30d, den der Passagiersitz 10d ausbildet, angeordnet. Die Sitzstrukturelemente 26d, 28d sind als Sitzteiler ausgebildet. Die Sitzstrukturelemente 26d, 28d sind an den Querträgern 24d angeordnet. Die Sitzstrukturelemente 26d, 28d sind im Wesentlichen L-förmig ausgebildet. Die Sitzstrukturelemente 26d, 28d erstrecken sich also in ihrem hinteren Bereich nach oben, von der Aufständereinheit 12d, insbesondere der Aufständerebene weg. Die Sitzstrukturelemente 26d, 28d erstrecken sich in ihrem hinteren Bereich nach oben bis im Wesentlichen auf eine Armlehnenhöhe X. Die Sitzstrukturelemente 26d, 28d erstrecken sich bis auf eine Armlehnenhöhe X des Passagiersitzes 10d.

Die Passagiersitzvorrichtung umfasst eine Rückenlehne 34d. Die Rückenlehne 34d ist schwenkbar zu der Aufständereinheit 12d angeordnet. Die Rückenlehne 34d ist an die Sitzstrukturelemente 26d, 28d angebunden. Die Rückenlehne 34d ist dazu vorgesehen, zwischen einer aufrechten Sitzstellung und einer Komfortstellung verschwenkt zu werden. Die Rückenlehne 34d weist ein schwenkbares Rückenlehnenelement 36d auf. Das schwenkbare Rückenlehnenelement 36d ist schwenkbar an der Aufständereinheit 12d gelagert. Die Sitzstrukturelemente 26d, 28d weisen jeweils eine Lagerstelle 38d, 40d zur Lagerung des schwenkbaren Rückenlehnenelements 36d auf. Die Passagiersitzvorrichtung weist eine Lagervorrichtung 42d auf. Die Lagervorrichtung 42d ist dazu vorgesehen, die Rückenlehne 34d verschwenkbar zwischen der aufrechten Sitzstellung und der Komfortstellung zu lagern. Die Lagervorrichtung 42d ist dazu vorgesehen, das schwenkbare Rückenlehnenelement 36d verschwenkbar zwischen der aufrechten Sitzstellung und der Komfortstellung zu lagern. Die Lagervorrichtung 42d bildet die Drehachse 44d aus. Die Lagervorrichtung 42d weist zwei Lagerbolzen 46d, 48d auf. Die Lagerbolzen 46d, 48d bilden die Drehachse 44d aus. Die Lagerbolzen 46d, 48d sind jeweils mit einer der Lagerstellen 38d, 40d eines der Sitzstrukturelemente 26d, 28d verbunden. Die Rückenlehne 34d ist als eine Rückenlehne mit einem hohen Rückenlehnendrehpunkt ausgebildet. Der Rückenlehnendrehpunkt, also die Drehachse 44d der Lagervorrichtung 42d, ist oberhalb eines Kniebereichs 50d des Passagiersitzes 10d angeordnet. Zur Ausbildung des hohen Rückenlehnendrehpunkts bilden die Sitzstrukturelemente 26d, 28d ihre Lagerstellen 38d, 40d zur Lagerung der Rückenlehne 34d in einem hohen Bereich aus. Die Lagerstellen 38d, 40d der Sitzstrukturelemente 26d, 28d sind oberhalb des Kniebereichs 50d angeordnet. Die Lagerstellen 38d, 40d der Sitzstrukturelemente 26d, 28d sind in der Armlehnenhöhe X angeordnet.

Das schwenkbare Rückenlehnenelement 36d weist einen Rückenlehnenrahmen 60d auf. Der Rückenlehnenrahmen 60d bildet eine tragende Struktur des schwenkbaren Rückenlehnenelements 36d aus. Das schwenkbare Rückenlehnenelement 36d weist ein Schalenelement 62d auf. Das Schalenelement 62d ist aus einem faserverstärkten Kunststoff gebildet. Das Schalenelement 62d ist fest mit dem Rückenlehnenrahmen 60d des schwenkbaren Rückenlehnenelements 36d verbunden. Das Schalenelement 62d des schwenkbaren Rückenlehnenelements 36d weist einen Mittelbereich 80d auf. Das schwenkbare Rückenlehnenelement 36d weist in einem unteren Bereich sich von dem Mittelbereich 80d jeweils seitlich nach außen erstreckende elastische Rippen 84d, 86d auf. Die elastischen Rippen 84d, 86d sind vorzugsweise einstückig mit dem Schalenelement 62d, insbesondere mit dem Mittelbereich 80d, ausgebildet.

Die Rückenlehne 34d weist ein unteres Rückenlehnenelement 52d auf. Das untere Rückenlehnenelement 52d bildet einen unteren Bereich der Rückenlehne 34d aus. Das untere Rückenlehnenelement 52d bildet in dem unteren Bereich der Rückenlehne 34d die Rückenlehnenabstützfläche aus. Das untere Rückenlehnenelement 52d ist fest an den Sitzstrukturelementen 26d, 28d befestigt. Das untere Rückenlehnenelement 52d erstreckt sich im Wesentlichen zwischen einer Höhe der Querträger 22d, 24d der Aufständereinheit 12d und einem unteren Ende des schwenkbaren Rückenlehnenelements 36d. Das untere Rückenlehnenelement 52d ist von einem Schalenelement gebildet. Das untere Rückenlehnenelement 52d ist von einer Schale aus einem faserverstärkten Kunststoff gebildet.

Die Passagiersitzvorrichtung weist ein Rückstellmodul 56d auf. Das Rückstellmodul 56d ist zu einer Rückstellung der Rückenlehne 34d aus der Komfortstellung in eine aufrechte Sitzstellung vorgesehen. Das Rückstellmodul 56d ist zur Rückstellung des schwenkbaren Rückenlehnenelements 36d vorgesehen. Das Rückstellmodul 56d ist zur Rückstellung der Rückenlehne 34d, insbesondere zur Rückstellung des schwenkbaren Rückenlehnenelements 36d, dazu vorgesehen, eine Rückstellkraft bereitzustellen. Das Rückstellmodul 56d weist zur Bereitstellung einer Rückstellkraft ein Blattfederelement 58d auf. Im Unterschied zu den vorhergehenden Ausführungsbeispielen ist das Blattfederelement 58d zumindest teilweise einstückig mit dem unteren Rückenlehnenelement 52d ausgebildet.

Das Blattfederelement 58d ist einstückig mit dem als Schalenelement ausgebildeten unteren Rückenlehnenelement 52d ausgebildet. Das Blattfederelement 58d ist von einem mittleren Bereich des unteren Rückenlehnenelements 52d ausgebildet. Das Blattfederelement 58d ist teilweise in das untere Schalenelement integriert. Das Blattfederelement 58d ist in faserverstärkte Lagen des als Schalenelement ausgebildeten unteren Rückenlehnenelements 52d eingebettet. Das Blattfederelement 58d ist vorzugsweise als ein in einem Herstellverfahren in das untere Rückenlehnenelement 52d eingelegtes Blattfederelement gebildet. Das Blattfederelement 58d erstreckt sich von dem unteren Rückenlehnenelement 52d aus bis in eine Mitte des schwenkbaren Rückenlehnenelements 36d.

Zur Anbindung des Blattfederelements 58d an das schwenkbare Rückenlehnenelement 36d weist das Rückstellmodul 56d eine erste Befestigungseinheit 64d auf. Das schwenkbare Rückenlehnenelement 36d weist einen Querträger 66d auf. Der Querträger 66d ist in einem Bereich oberhalb der Lagerstellen 38d, 40d angeordnet. Das Blattfederelement 58d ist über die Befestigungseinheit 64d direkt an den Querträger 66d angebunden. Das Blattfederelement 58d ist axial beweglich mit dem Querträger 66d verbunden. Das Blattfederelement 58d weist zwei als Langlöcher ausgebildeten Durchgangsnuten auf, über die das Blattfederelement 58d über zwei Befestigungselemente, beispielsweise Schrauben, der Befestigungseinheit 64d verschiebbar mit dem Querträger 66d verbunden ist. Die erste Befestigungseinheit 64d zur Anbindung des Blattfederelements 58d kann vorzugsweise äquivalent zu der zweiten Befestigungseinheit des ersten Ausführungsbeispiels zur Anbindung des Blattfederelements an das untere Rückenlehnenelement 52d ausgebildet sein.

Das Rückstellmodul 56d weist eine Verriegeleinheit 88d auf. Die Verriegeleinheit 88d ist dazu vorgesehen, das Rückstellmodul 56d zu verriegeln bzw. zu entriegeln. Die Verriegeleinheit 88d ist dazu vorgesehen, die Rückenlehne 34d, also das schwenkbare Rückenlehnenelement 36d, zumindest in der aufrechten Sitzstellung und in der Komfortstellung zu verriegeln. Die Verriegeleinheit 88d ist funktionstechnisch vorzugsweise zwischen dem schwenkbaren Rückenlehnenelement 36d, insbesondere dem Rückenlehnenrahmen 60d, und einem der Sitzstrukturelemente 26d, 28d angeordnet. Die Verriegeleinheit 88d ist oberhalb des Kniebereichs 50d der Rückenlehne 34d angeordnet. Die Verriegeleinheit 88d ist vorzugsweise in einem Bereich oberhalb der Lagerstellen 38d, 40d der Sitzstrukturelemente 26d, 28d angeordnet. Die Verriegeleinheit 88d ist vorzugsweise im Wesentlichen, also zu einem Großteil, oberhalb der Armlehnenhöhe X angeordnet.

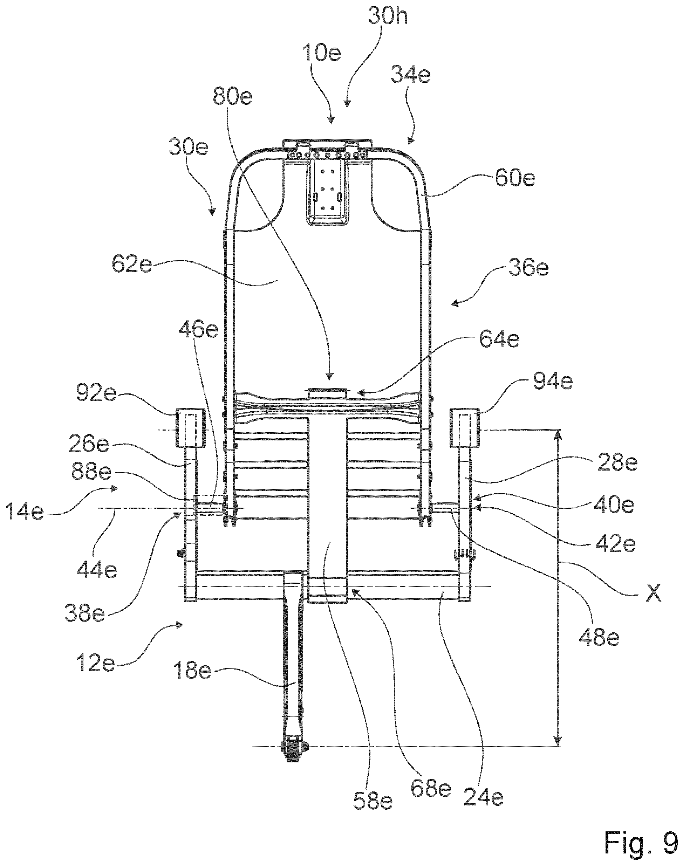

Die Figur 9 zeigt ein Beispiel, das nicht unter den Geltungsbereich der Ansprüche fällt. Die Passagiersitzvorrichtung ist Teil eines teilweise dargestellten Passagiersitzes 10e. Die Passagiersitzvorrichtung weist eine Aufständereinheit 12e auf. Mittels der Aufständereinheit 12e ist der Passagiersitz 10e auf dem Kabinenboden der Flugzeugkabine aufständerbar. Die Aufständereinheit 12e weist zwei Querträger 24e auf. Die Passagiersitzvorrichtung weist zwei Sitzstrukturelemente 26e, 28e auf. Die zwei Sitzstrukturelemente 26e, 28e sind jeweils auf einer Seite eines Sitzbereichs 30e der Passagiersitzvorrichtung angeordnet. Die zwei Sitzstrukturelemente 26e, 28e sind jeweils seitlich eines Sitzbereichs 30e, den der Passagiersitz 10e ausbildet, angeordnet. Die Sitzstrukturelemente 26e, 28e sind als Sitzteiler ausgebildet. Die Sitzstrukturelemente 26e, 28e sind im wesentlichen L-förmig ausgebildet. Die Sitzstrukturelemente 26e, 28e weisen jeweils einen ersten Teilbereich auf, der in montiertem Zustand im Wesentlichen horizontal ausgerichtet ist. Die Sitzstrukturelemente 26e, 28e weisen jeweils einen zweiten Teilbereich auf, der in montierten Zustand im Wesentlichen vertikal ausgerichtet ist. Der zweite Teilbereich der Sitzstrukturelemente 26e, 28e ist in einem hinteren Bereich des Passagiersitzes 10e angeordnet. Die Sitzstrukturelemente 26e, 28e sind an den Querträgern 24e angeordnet. Die Sitzstrukturelemente 26e, 28e erstrecken sich also in ihrem hinteren Bereich nach oben, von der Aufständereinheit 12e, insbesondere der Aufständerebene weg. Die Sitzstrukturelemente 26e, 28e erstrecken sich in ihrem hinteren Bereich nach oben bis im Wesentlichen auf eine Armlehnenhöhe X. Die Sitzstrukturelemente 26e, 28e erstrecken sich bis auf eine Armlehnenhöhe X des Passagiersitzes 10e.

Die Passagiersitzvorrichtung umfasst eine Rückenlehne 34e. Die Rückenlehne 34e ist schwenkbar zu der Aufständereinheit 12e angeordnet. Die Rückenlehne 34 ist an den Sitzstrukturelementen 26e, 28e angebunden. Die Rückenlehne 34e ist dazu vorgesehen, zwischen einer aufrechten Sitzstellung und einer Komfortstellung verschwenkt zu werden. Die Rückenlehne 34e weist ein schwenkbares Rückenlehnenelement 36e auf. Im Unterschied zu den vorhergehenden Ausführungsbeispielen ist die Rückenlehne 34e als eine Rückenlehne mit einem unteren Rückenlehnendrehpunkt ausgebildet. Die Rückenlehne 34e weist vorzugsweise kein mit den Sitzstrukturelementen 26e, 28e starr verbundenes unteres Rückenlehnenelement auf. Das schwenkbare Rückenlehnenelement 36e erstreckt sich bis in einen Bereich des Sitzbodens 32e des Passagiersitzes. Das schwenkbare Rückenlehnenelement 36e erstreckt sich bis in einen Bereich unterhalb einer von dem Sitzboden 32e ausgebildeten Sitzfläche. Das schwenkbare Rückenlehnenelement 36e ist in einem Bereich unterhalb der Armlehnenhöhe X schwenkbar gelagert.

Das schwenkbare Rückenlehnenelement 36e ist schwenkbar an die Sitzstrukturelemente 26e, 28e angebunden. Die Sitzstrukturelemente 26e, 28e weisen jeweils eine Lagerstelle 38e, 40e zur Lagerung des schwenkbaren Rückenlehnenelements 36e auf. Zur Ausbildung des unteren Rückenlehnendrehpunkts bilden die Sitzstrukturelemente 26e, 28e ihre Lagerstellen 38e, 40e zur Lagerung des schwenkbaren Rückenlehnenelements 36e in einem unteren Bereich. Die Lagerstellen 38e, 40e der Sitzstrukturelemente 26e, 28e sind vorzugsweise in einem unteren Drittel der Sitzstrukturelemente 26e, 28e, insbesondere in einem unteren Drittel des zweiten Teilbereichs der Sitzstrukturelemente 26e, 28e angeordnet. Die Lagerstellen 38e, 40e der Sitzstrukturelemente 26e, 28e sind in einem Kniebereich 50e der Rückenlehne 34e angeordnet. Die Lagerstellen 38e, 40e der Sitzstrukturelemente 26e, 28e sind unterhalb der Armlehnenhöhe X angeordnet.

Die Passagiersitzvorrichtung weist eine Lagervorrichtung 42e auf. Die Lagervorrichtung 42e ist dazu vorgesehen, das schwenkbare Rückenlehnenelement 36e verschwenkbar zwischen der aufrechten Sitzstellung der Komfortstellung zu lagern. Die Lagervorrichtung 42e eine Drehachse 44e aus. Die Drehachse 44e zur Lagerung des schwenkbaren Rückenlehnenelements 36e ist unterhalb der Armlehnenhöhe X angeordnet. Die Lagervorrichtung 42e weist zwei Lagerbolzen 46e, 48e auf. Die Lagerbolzen 46e, 48e bilden die Drehachse 44e aus. Die Lagerbolzen 46e, 48e sind jeweils mit einer der Lagerstellen 38e, 40e eines der Sitzstrukturelemente 26e, 28e verbunden.

Das schwenkbare Rückenlehnenelement 36e weist einen Rückenlehnenrahmen 60e auf. Der Rückenlehnenrahmen 60e erstreckt sich bis in einen Bereich unterhalb der Lagerstellen 38e, 40e der Sitzstrukturelemente 26e, 28e. Das schwenkbare Rückenlehnenelement 36e weist ein Schalenelement 62e auf, das fest mit dem Rückenlehnenrahmen 60e des schwenkbaren Rückenlehnenelements 36e verbunden ist. Das Schalenelement 62e des schwenkbaren Rückenlehnenelements 36e weist einen Mittelbereich 80e und in einem unteren Bereich von dem Mittelbereich 80e jeweils sich seitlich nach außen erstreckende elastische Rippen 84e, 86e auf.

Die Passagiersitzvorrichtung weist ein Rückstellmodul 56e auf. Das Rückstellmodul 56e ist zu einer Rückstellung der Rückenlehne 34e aus der Komfortstellung in eine aufrechte Sitzstellung vorgesehen. Das Rückstellmodul 56e ist zur Rückstellung des schwenkbaren Rückenlehnenelements 36e vorgesehen. Das Rückstellmodul 56e weist zur Bereitstellung einer Rückstellkraft ein Blattfederelement 58e auf. Das Blattfederelement 58e ist funktionstechnisch zwischen dem schwenkbaren Rückenlehnenelement 36e und der Aufständereinheit 12e angeordnet. Das Blattfederelement 58e ist mit seinem ersten, unteren Ende, im Unterschied zu den anderen Ausführungsbeispielen direkt an die Aufständereinheit 12e, insbesondere an den hinteren Querträger 24e angebunden. Das Blattfederelement 58e stützt sich mit seinem unteren Ende an dem hinteren Querträger 24e der Aufständereinheit 12e ab. Zur Anbindung des Blattfederelements 58e an den hinteren Querträger 24e weist das Rückstellmodul 56e eine Befestigungseinheit 68e auf. Über die Befestigungseinheit 68e ist das Blattfederelement 58e fest an die Aufständereinheit 12e angebunden. Die Befestigungseinheit 68e weist vorzugsweise ein Schellenelement auf, das den hinteren Querträger 24e umschließt und so fest an dem Querträger 24e angebunden ist. Über die Befestigungseinheit 68e ist das Blattfederelement 58e vorzugsweise in zumindest eine Vertikalrichtung beweglich an den hinteren Querträger 24e angebunden. Das Blattfederelement 58e ist mit einem zweiten, oberen Ende an dem schwenkbaren Rückenlehnenelement 36e angebunden. Zur Anbindung des Blattfederelements 58e an das schwenkbare Rückenlehnenelement 36e weist das Rückstellmodul 56e eine Befestigungseinheit 64e auf.

Das Rückstellmodul 56e weist eine Verriegeleinheit 88e auf. Die Verriegeleinheit 88e ist dazu vorgesehen, das Rückstellmodul 56e zu verriegeln, bzw. zu entriegeln. Die Verriegeleinheit 88e ist vorzugsweise in einem Bereich oberhalb der Lagerstellen 38e, 40e der Sitzstrukturelemente 26e, 28e angeordnet. Das gesamte Rückstellmodul 56e, bis auf den Teilbereich des Blattfederelements 58e, der sich bis zu dem Querträger 24e der Aufständereinheit 12e erstreckt, ist oberhalb der Lagerstellen 38e, 40e der Sitzstrukturelemente 26e, 28e, also oberhalb der Drehachse 44e des schwenkbaren Rückenlehnenelements 36e angeordnet.

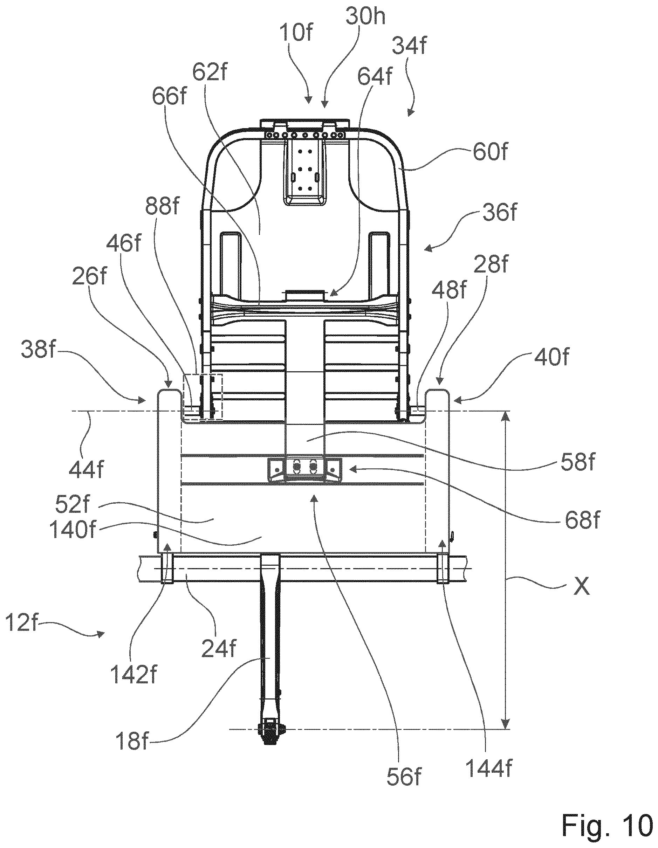

Die Figur 10 zeigt ein Beispiel, das nicht unter den Geltungsbereich der Ansprüche fällt.

Die Passagiersitzvorrichtung ist Teil eines teilweise dargestellten Passagiersitzes 10f. Die Passagiersitzvorrichtung weist eine Aufständereinheit 12f auf. Mittels der Aufständereinheit 12f ist der Passagiersitz 10f auf dem Kabinenboden der Flugzeugkabine aufständerbar. Die Aufständereinheit 12f weist zwei Querträger 24f auf. Die Passagiersitzvorrichtung weist zwei Sitzstrukturelemente 26f, 28f auf. Die zwei Sitzstrukturelemente 26f, 28f sind jeweils auf einer Seite eines Sitzbereichs 30f der Passagiersitzvorrichtung angeordnet. Die zwei Sitzstrukturelemente 26f, 28f sind jeweils seitlich eines Sitzbereichs 30f, den der Passagiersitz 10f ausbildet, angeordnet. Das schwenkbare Rückenlehnenelement 36f ist schwenkbar an den Sitzstrukturelementen 26f, 28f angebunden. Die Sitzstrukturelemente 26f, 28f weisen jeweils eine Lagerstelle 38f, 40f zur Lagerung des schwenkbaren Rückenlehnenelements 36f auf.

Die Passagiersitzvorrichtung umfasst einen Sitzboden 32f. Der Sitzboden 32f weist einen tragenden Grundkörper auf. Der Sitzboden 32f weist zudem ein Polsterelement auf, das auf dem Grundköper angebunden ist. Der Sitzboden 32f ist an die Aufständereinheit 12f angebunden. Die Passagiersitzvorrichtung umfasst eine Rückenlehne 34f. Die Rückenlehne 34f ist schwenkbar zu der Aufständereinheit 12f angeordnet. Die Rückenlehne 34f ist an den Sitzstrukturelementen 26f, 28f angebunden. Die Rückenlehne 34f ist als eine Rückenlehne mit einem hohen Rückenlehnendrehpunkt ausgebildet. Die Rückenlehne 34f weist ein unteres Rückenlehnenelement 52f auf. Das untere Rückenlehnenelement 52f bildet einen unteren Bereich der Rückenlehne 34f aus. Das untere Rückenlehnenelement 52f bildet in dem unteren Bereich der Rückenlehne 34f die Rückenlehnenabstützfläche aus. Das untere Rückenlehnenelement 52f ist starr mit der Aufständereinheit 12f verbunden. Die Rückenlehne 34f ist dazu vorgesehen, zwischen einer aufrechten Sitzstellung und einer Komfortstellung verschwenkt zu werden. Die Rückenlehne 34f weist ein schwenkbares Rückenlehnenelement 36f auf. Das schwenkbare Rückenlehnenelement 36f weist einen Rückenlehnenrahmen 60f auf. Das schwenkbare Rückenlehnenelement 36f weist ein Schalenelement 62f auf. Das schwenkbare Rückenlehnenelement 36f ist im Wesentlichen gleich ausgebildet wie im ersten Ausführungsbeispiel und soll deshalb hier nicht im Detail beschrieben werden.

Im Unterschied zu den vorhergehenden Ausführungsbeispielen sind die Sitzstrukturelemente 26f, 28f nicht als Sitzteiler ausgebildet. Die Passagiersitzvorrichtung weist ein Sitzschalenelement 140f auf. Das Sitzschalenelement 140f bildet das untere Rückenlehnenelement 52f und den Grundkörper eines Sitzbodens 32f einstückig aus. Das Sitzschalenelement 140f bildet in einem unteren, vorderen Bereich den Grundkörper des Sitzbodens 32f aus. In einem hinteren Bereich bildet das Sitzschalenelement 140f das untere Rückenlehnenelement 52f aus. Das Sitzschalenelement 140f ist von einem faserverstärkten Kunststoff gebildet. Das Sitzschalenelement 140f ist vorzugsweise aus einem CFK oder einem GFK gebildet. Grundsätzlich ist es auch denkbar, dass das Sitzschalenelement 140f von einem anderen geeigneten faserverstärkten Kunststoff gebildet ist. Das Sitzschalenelement 140f ist in einer Seitenansicht im Wesentlichen L-förmig ausgebildet. Die Sitzstrukturelemente 26f, 28f sind im Unterschied zu den vorhergehenden Ausführungsbeispielen einstückig mit dem Sitzschalenelement 140f ausgebildet. Die Sitzstrukturelemente 26f, 28f sind zumindest teilweise von dem unteren Rückenlehnenelement 52f und dem Grundkörper des Sitzbodens 32f ausgebildet. Das Sitzschalenelement 140f weist Seitenbereiche 142f, 144f auf. Die Seitenbereiche 142f, 144f bilden in Querrichtung betrachtet jeweils ein seitliches Ende des Sitzschalenelements 140f aus. Die Sitzstrukturelemente 26f, 28f sind in den Seitenbereichen 142f, 144f des Sitzschalenelements 140f ausgebildet. Die Seitenbereiche 142f, 144f des Sitzschalenelements 140f bilden jeweils eines der Sitzstrukturelemente 26f, 28f aus. Vorzugsweise weist das Sitzschalenelement 140f in seinen Seitenbereichen 142f, 144f zur Ausbildung der Sitzstrukturelemente 26f, 28f jeweils zumindest ein Verstärkungselement auf. Die Verstärkungselemente können beispielsweise als Einleger ausgebildet sein, die in die Seitenbereiche 142f, 144f des Sitzschalenelements 140f eingelegt sind. Die als Einleger ausgebildeten Verstärkungselemente könnten beispielsweise aus einem Metall, wie einem Aluminium oder einem Magnesium ausgebildet sein. Grundsätzlich wäre es auch denkbar, dass die Verstärkungselemente von lokalen Verstärkungen aus einem CFK oder GFK gebildet sind.

Das Sitzschalenelement 140f erstreckt sich in seinen Seitenbereichen 142f, 144f, in denen es die Sitzstrukturelemente 26f, 28f ausbildet, bis über eine Oberkante des von ihm ausgebildeten unteren Rückenlehnenelements 52f. Das Sitzschalenelement 140f erstreckt sich in seinen Seitenbereichen 142f, 144f, in denen es die Sitzstrukturelemente 26f, 28f ausbildet, bis über eine Armlehnenhöhe X. Das Sitzschalenelement 140f bildet in seinen Seitenbereichen 142f, 144f jeweils in den oberen Endbereichen die Lagerstellen 38f, 40f der Sitzstrukturelemente 26f, 28f aus. Das Sitzschalenelement 140f bildet in den oberen Endbereichen seiner Seitenbereiche 142f, 144f jeweils in die Lagerstellen 38f, 40f der Sitzstrukturelemente 26f, 28f aus, über die das schwenkbare Rückenlehnenelement 36f schwenkbar gelagert ist. Das schwenkbare Rückenlehnenelement 36f ist über die Lagerstellen 38f, 40f direkt schwenkbar mit dem Sitzschalenelement 140f verbunden.

Die Passagiersitzvorrichtung weist eine Lagervorrichtung 42f auf. Die Lagervorrichtung 42f ist dazu vorgesehen, dass schwenkbare Rückenlehnenelement 36f verschwenkbar zwischen der aufrechten Sitzstellung der Komfortstellung zu lagern. Die Lagervorrichtung 42f bildet die Drehachse 44f aus. Die Lagervorrichtung 42f weist zwei Lagerbolzen 46f, 48f auf. Die Lagerbolzen 46f, 48f sind jeweils mit einer der Lagerstellen 38f, 40f der von dem Sitzschalenelement 140f ausgebildeten Sitzstrukturelemente 26f, 28f verbunden. Die Lagerbolzen 46f, 48f sind mit dem Sitzschalenelement 140f fest verbunden. Über die Lagerbolzen 46f, 48f ist das schwenkbare Rückenlehnenelement 36f direkt schwenkbar an das Sitzschalenelement 140f angebunden.

Das Sitzschalenelement 140f ist breiter ausgebildet als das schwenkbare Rückenlehnenelement 36f. Das Sitzschalenelement 140f umgreift mit seinen oberen Enden der Seitenbereiche 142f, 144f, in denen die Lagerstellen 38f, 40f angeordnet sind, das schwenkbare Rückenlehnenelement 36, insbesondere dessen Rückenlehnenrahmen 60f, an seinem unteren Ende. Die Lagerbolzen 46f, 48f erstrecken sich von den Seitenbereichen 142f, 144f des Sitzschalenelements 140f jeweils nach innen, in Richtung des Rückenlehnenrahmens 60f des schwenkbaren Rückenlehnenelements 36f. Das schwenkbare Rückenlehnenelement 36f ist schwenkbar an den Lagerbolzen 46f, 48f angebracht.

Die Passagiersitzvorrichtung weist ein Rückstellmodul 56f auf. Das Rückstellmodul 56f ist zu einer Rückstellung der Rückenlehne 34f aus der Komfortstellung in eine aufrechte Sitzstellung vorgesehen. Das Rückstellmodul 56f ist zur Rückstellung des schwenkbaren Rückenlehnenelements 36f vorgesehen. Das Rückstellmodul 56f ist zur Rückstellung der Rückenlehne 34f, insbesondere zur Rückstellung des schwenkbaren Rückenlehnenelements 36f dazu vorgesehen, eine Rückstellkraft bereitzustellen. Das Rückstellmodul 56f weist zur Bereitstellung einer Rückstellkraft ein Blattfederelement 58f auf. Das Rückstellmodul 56f kann vorzugsweise so ausgebildet sein wie in einem der vorhergehenden Ausführungsbeispiele. Beispielhaft ist das Rückstellmodul 56f im Wesentlichen gleich ausgebildet wie in dem ersten Ausführungsbeispiel.

Das Blattfederelement 58f ist funktionstechnisch zwischen dem Sitzschalenelement 140f und dem schwenkbaren Rückenlehnenelement 36f angeordnet. Das Blattfederelement 58f ist mit seinem ersten, unteren Ende an dem Sitzschalenelement 140f, insbesondere an dem von dem Sitzschalenelement 140f ausgebildeten unteren Rückenlehnenelement 52f, angebunden. Zur Anbindung des Blattfederelements 58f an das Sitzschalenelement 140f weist das Rückstellmodul 56f eine Befestigungseinheit 68f auf. Über die Befestigungseinheit 68f ist das Blattfederelement 58f beweglich an das Sitzschalenelement 140f angebunden. Zur Anbindung des Blattfederelements 58f an das schwenkbare Rückenlehnenelement 36f weist das Rückstellmodul 56f eine Befestigungseinheit 64f auf. Das schwenkbare Rückenlehnenelement 36f weist einen Querträger 66f auf. Das Blattfederelement 58f ist über die Befestigungseinheit 64f direkt an den Querträger 66f angebunden.

Das Rückstellmodul 56f weist eine Verriegeleinheit 88f auf. Die Verriegeleinheit 88f ist dazu vorgesehen, das Rückstellmodul 56f zu verriegeln, bzw. zu entriegeln. Die Verriegeleinheit 88f ist funktionstechnisch vorzugsweise zwischen dem schwenkbaren Rückenlehnenelement 36f, insbesondere dem Rückenlehnenrahmen 60f und dem Sitzschalenelement 140f angeordnet. Die Verriegeleinheit 88f ist oberhalb eines Kniebereichs 50f der Rückenlehne 34f angeordnet. Die Verriegeleinheit 88f ist vorzugsweise in einem Bereich oberhalb der Lagerstellen 38f, 40f der von dem Sitzschalenelement 140f ausgebildeten Sitzstrukturelemente 26f, 28f angeordnet. Die Verriegeleinheit 88f ist vorzugsweise im Wesentlichen, also zu einem Großteil oberhalb der Armlehnenhöhe X angeordnet.

### Bezugszeichen

- 10: Passagiersitz
- 12: Aufständereinheit
- 14: Passagiersitzreihe
- 16: Passagiersitz
- 18: Sitzfuß
- 20: Sitzfuß
- 22: Querträger
- 24: Querträger
- 26: Sitzstrukturelement
- 28: Sitzstrukturelement
- 30: Sitzbereich
- 32: Sitzboden
- 34: Rückenlehne
- 36: schwenkbares Rückenlehnenelement
- 38: Lagerstelle
- 40: Lagerstelle
- 42: Lagervorrichtung
- 44: Drehachse
- 46: Lagerbolzen
- 48: Lagerbolzen
- 50: Kniebereich
- 52: unteres Rückenlehnenelement
- 54: Befestigungselement
- 56: Rückstellmodul
- 58: Blattfederelement
- 60: Rückenlehnenrahmen
- 62: Schalenelement
- 64: Befestigungseinheit
- 66: Querträger
- 68: Befestigungseinheit
- 70: Befestigungsgrundkörper
- 72: Befestigungselement
- 74: Befestigungselement
- 76: Durchgangsnut
- 78: Durchgangsnut
- 80: Mittelbereich
- 82: Aufnahmebereich
- 84: Rippe
- 86: Rippe
- 88: Verriegeleinheit
- 90: Betätigungselement
- 92: Armlehne
- 94: Armlehne

- 100: Bespannung
- 102: Hauptbereich
- 104: Lippe
- 106: Vorderseite
- 108: Querversteifungselement

- 140: Sitzschalenelement
- 142: Seitenbereich
- 144: Seitenbereich

## Patentansprüche

1. Passagiersitzvorrichtung mit einer Aufständereinheit (12a; 12b; 12c; 12d; 12e; 12f), die zur Montage auf einem Kabinenboden vorgesehen ist, mit einer Rückenlehne (34a, 34b; 34c; 34d; 34e; 34f), mit einer Lagervorrichtung (42a; 42b; 42c; 42d; 42e; 42f), die dazu vorgesehen ist, die Rückenlehne (34a, 34b; 34c; 34d; 34e; 34f) verschwenkbar zwischen einer aufrechten Sitzstellung und einer Komfortstellung relativ zu der Aufständereinheit (12a; 12b; 12c; 12d; 12e; 12f) zu lagern, wobei die Rückenlehne (34a, 34b; 34c; 34d; 34e; 34f) ein schwenkbares Rückenlehnenelement (36a, 36b; 36c; 36d; 36e; 36f) umfasst, und mit wenigstens einem Rückstellmodul (56a; 56b; 56c; 56d; 56e; 56f), das zumindest zur Bereitstellung einer Rückstellkraft zur Rückstellung der Rückenlehne (34a, 34b; 34c; 34d; 34e; 34f) aus der Komfortstellung in die aufrechte Sitzstellung vorgesehen ist, und dazu zumindest ein Blattfederelement (58a; 58b; 58c; 58d; 58e; 58f) umfasst, **dadurch gekennzeichnet, dass** die Rückenlehne (34a -34f) ein unteres, starres Rückenlehnenelement (52a - 52f) umfasst, wobei das Blattfederelement (58a - 58f) funktionstechnisch zwischen dem unteren Rückenlehnenelement (52a - 52f) und dem schwenkbaren Rückenlehnenelement (36a - 36f) angeordnet ist.

2. Passagiersitzvorrichtung nach Anspruch 1,
**dadurch gekennzeichnet,**
**dass** das Blattfederelement (58a - 58f) zumindest teilweise in das schwenkbare Rückenlehnenelement (36a - 36f) integriert ist.

3. Passagiersitzvorrichtung nach Anspruch 2,
**dadurch gekennzeichnet, dass** das Blattfederelement (58a - 58f) zumindest teilweise einstückig mit dem schwenkbaren Rückenlehnenelement (36a - 36f) ausgebildet ist.

4. Passagiersitzvorrichtung nach einem der vorhergehenden Ansprüche, **dadurch gekennzeichnet, dass** das schwenkbare Rückenlehnenelement (36a - 36f) zumindest in einem unteren Bereich sich von einem Mittelbereich (80a - 80f) jeweils seitlich nach außen erstreckende, elastische Rippen (84a - 84f, 86a - 86f) angeordnet sind, die dazu vorgesehen sind, federelastisch ausgelenkt zu werden.

5. Passagiersitzvorrichtung nach Anspruch 4,
**dadurch gekennzeichnet, dass** das schwenkbare Rückenlehnenelement (36a - 36f) ein Schalenelement (62a - 62f) umfasst, das in einem unteren Bereich den vertikal durchgehenden Mittelbereich (80a - 80f) und die sich seitlich nach außen erstreckenden Rippen (84a - 84f, 86a - 86f) im Wesentlichen einstückig ausbildet.

6. Passagiersitzvorrichtung zumindest nach Anspruch 5,
**dadurch gekennzeichnet,**
**dass** der durchgehende Mittelbereich (80a- 80f) des Schalenelements (62a - 62f) eine Aufnahmebereich (82a - 82f) für das Blattfederelement (58a - 58f) aufweist oder das Blattfederelement (58a - 58f) zumindest teilweise ausbildet.

7. Passagiersitzvorrichtung nach einem der vorhergehenden Ansprüche, **dadurch gekennzeichnet, dass** das Blattfederelement (58a - 58f) zur Bereitstellung einer Rückstellkraft, zumindest teilweise einstückig mit dem unteren Rückenlehnenelement (52a - 52f) ausgebildet ist.

8. Passagiersitzvorrichtung nach einem der vorhergehenden Ansprüche, **dadurch gekennzeichnet, dass** die Lagervorrichtung (42a - 42f) eine Drehachse (44a - 44f) ausbildet, über die das schwenkbare Rückenlehnenelement (36a - 36f) zu dem unteren Rückenlehnenelement (52a - 52f) verschwenkbar gelagert ist, wobei die Drehachse (44a - 44f) oberhalb eines Kniebereichs (50a - 50f) der Rückenlehne (34a - 34f) angeordnet ist.

9. Passagiersitzvorrichtung nach Anspruch 1, **dadurch gekennzeichnet, dass** das schwenkbare Rückenlehnenelement (36a - 36f) in unterem Bereich an der Aufständereinheit (12a - 12f) gelagert ist.

## Claims

1. Passenger seat device
having a mounting unit (12a; 12b; 12c; 12d; 12e; 12f) which is configured for mounting on a cabin floor,
having a backrest (34a, 34b; 34c; 34d; 34e; 34f),
having a bearing device (42a; 42b; 42c; 42d; 42e; 42f) which is configured for supporting the backrest (34a, 34b; 34c; 34d; 34e; 34f) so as to be pivotable relative to the mounting unit (12a; 12b; 12c; 12d; 12e; 12f) between an upright sitting position and a comfort position, wherein the backrest (34a, 34b; 34c; 34d; 34e; 34f) comprises a pivotable backrest element (36a, 36b; 36c; 36d; 36e; 36f), and having at least one restoring module (56a; 56b; 56c; 56d; 56e; 56f) which is configured at least for providing a restoring force for restoring the backrest (34a, 34b; 34c; 34d; 34e; 34f) from the comfort position into the upright sitting position and for this purpose comprises at least one leaf spring element (58a; 58b; 58c; 58d; 58e; 58f),
**characterized in that** the backrest (34a - 34f) comprises a lower, rigid backrest element (52a - 52f), wherein the leaf spring element (58a - 58f) is arranged functionally between the lower backrest element (52a - 52f) and the pivotable backrest element (36a - 36f).

2. Passenger seat device according to claim 1,
**characterized in that** the leaf spring element (58a - 58f) is at least partially integrated into the pivotable backrest element (36a - 36f).

3. Passenger seat device according to claim 2,
**characterized in that** the leaf spring element (58a - 58f) is at least partially realized integrally with the pivotable backrest element (36a - 36f).

4. Passenger seat device according to any one of the preceding claims,
**characterized in that** the pivotable backrest element (36a - 36f) at least in a lower region comprises elastic ribs (84a - 84f, 86a - 86f) which each extend laterally outwards from a central region (80a - 80f) and which are configured for being deflected in a spring-elastic manner.

5. Passenger seat device according to claim 4,
**characterized in that** the pivotable backrest element (36a - 36f) comprises a shell element (62a - 62f) which in a lower region substantially forms integrally the vertically continuous central region (80a - 80f) and the laterally outwardly extending ribs (84a - 84f, 86a - 86f).

6. Passenger seat device at least according to claim 5,
**characterized in that** the continuous central region (80a - 80f) of the shell element (62a - 62f) has a receiving region (82a - 82f) for the leaf spring element (58a - 58f) or at least partially forms the leaf spring element (58a - 58f).

7. Passenger seat device according to any one of the preceding claims,
**characterized in that** the leaf spring element (58a - 58f) is at least partially realized integrally with the lower backrest element (52a - 52f) for providing a restoring force.

8. Passenger seat device according to any one of the preceding claims,
**characterized in that** the bearing device (42a - 42f) forms an axis of rotation (44a - 44f) via which the pivotable backrest element (36a - 36f) is pivotably supported relative to the lower backrest element (52a - 52f), wherein the axis of rotation (44a - 44f) is arranged above a knee region (50a - 50f) of the backrest (34a - 34f).

9. Passenger seat device according to claim 1,
**characterized in that** the pivotable backrest element (36a - 36f) is in a lower region supported on the mounting unit (12a - 12f).

## Revendications

1. Dispositif de siège passager
avec une unité de montant (12a ; 12b ; 12c ; 12d ; 12e ; 12f) prévue pour être montée sur un plancher de cabine,
avec un dossier (34a, 34b ; 34c ; 34d ; 34e ; 34f),
avec un dispositif de palier (42a ; 42b ; 42c ; 42d ; 42e ; 42f) qui est conçu pour supporter le dossier (34a, 34b ; 34c ; 34d ; 34e ; 34f) de manière pivotante, entre une position d'assise droite et une position de confort, par rapport à l'unité de montant (12a ; 12b ; 12c ; 12d ; 12e ; 12f), le dossier (34a, 34b ; 34c ; 34d ; 34e ; 34f) comprenant un élément de dossier pivotable (36a, 36b ; 36c ; 36d ; 36e ; 36f),
et avec au moins un module de rappel (56a ; 56b ; 56c ; 56d ; 56e ; 56f) qui est prévu au moins pour fournir une force de rappel pour ramener le dossier (34a, 34b ; 34c ; 34d ; 34e ; 34f) de la position de confort à la position d'assise droite, et qui comprend à cet effet au moins un élément de ressort à lame (58a ; 58b ; 58c ; 58d ; 58e ; 58f),
**caractérisé en ce que** le dossier (34a - 34f) comprend un élément de dossier rigide inférieur (52a - 52f),
l'élément de ressort à lame (58a - 58f) étant disposé fonctionnellement entre l'élément de dossier inférieur (52a - 52f) et l'élément de dossier pivotable (36a - 36f).

2. Dispositif de siège passager selon la revendication 1,
**caractérisé en ce que** l'élément de ressort à lame (58a - 58f) est intégré au moins partiellement dans l'élément de dossier pivotable (36a - 36f).

3. Dispositif de siège passager selon la revendication 2,
**caractérisé en ce que** l'élément de ressort à lame (58a - 58f) est réalisé au moins partiellement intégralement avec l'élément de dossier pivotable (36a - 36f).

4. Dispositif de siège passager selon l'une quelconque des revendications précédentes,
**caractérisé en ce que** l'élément de dossier pivotable (36a - 36f) comprend dans au moins dans une zone inférieure de nervures élastiques (84a - 84f, 86a - 86f) qui s'étendent respectivement latéralement vers l'extérieur à partir d'une zone centrale (80a - 80f) et qui sont prévues pour être déviées moyennant élasticité par ressort.

5. Dispositif de siège passager selon la revendication 4,
**caractérisé en ce que** l'élément de dossier pivotable (36a - 36f) comprend un élément de coque (62a - 62f) qui forme dans une zone inférieure - essentiellement intégralement - la zone centrale (80a - 80f) verticalement continue aussi que les nervures (84a - 84f, 86a - 86f) qui s'étendent latéralement vers l'extérieur.

6. Dispositif de siège passager au moins selon la revendication 5,
**caractérisé en ce que** la zone centrale continue (80a - 80f) de l'élément de coque (62a - 62f) comprend une zone de logement (82a - 82f) pour l'élément de ressort à lame (58a - 58f) ou forme l'élément de ressort à lame (58a - 58f) au moins partiellement.

7. Dispositif de siège passager selon l'une quelconque des revendications précédentes,
**caractérisé en ce que** pour fournir une force de rappel, l'élément de ressort à lame (58a - 58f) est réalisé au moins partiellement intégralement avec l'élément de dossier inférieur (52a - 52f).

8. Dispositif de siège passager selon l'une quelconque des revendications précédentes,
**caractérisé en ce que** le dispositif de palier (42a - 42f) forme un axe rotatif (44a - 44f) par le biais duquel l'élément de dossier pivotable (36a - 36f) est supporté de manière pivotante par rapport à l'élément de dossier inférieur (52a - 52f), l'axe rotatif (44a - 44f) étant disposé au-dessus d'une zone de genou (50a - 50f) du dossier (34a - 34f).

9. Dispositif de siège passager selon la revendication 1,
**caractérisé en ce que** l'élément de dossier pivotable (36a - 36f) est supporté dans une zone inférieure sur l'unité de montant (12a - 12f).
